# EUROPÄISCHE PATENTSCHRIFT

(11) **EP 3 566 900 B1**
(45) Veröffentlichungstag und Bekanntmachung des Hinweises auf die Patenterteilung: **02.12.2020**
(21) Anmeldenummer: 19172549.8
(22) Anmeldetag: 03.05.2019
(51) Int. Cl.: B60P 3/00, B62B 3/00, B62B 5/00

(54) **TRANSPORTWAGEN FÜR SENDUNGEN UND VERFAHREN ZUM BETRIEB DES TRANSPORTWAGENS**
TRANSPORT VEHICLE FOR MAIL ITEMS AND METHOD FOR OPERATING THE TRANSPORT VEHICLE
CHARIOT DE TRANSPORT POUR EXPÉDITIONS ET PROCÉDÉ DE FONCTIONNEMENT DU CHARIOT DE TRANSPORT

(30) Priorität: 09.05.2018 DE 102018111153
(43) Veröffentlichungstag der Anmeldung: 13.11.2019
(73) Patentinhaber: Deutsche Post AG, 53113 Bonn (DE)
(72) Erfinder: Radetzki, Uwe, 53127 Bonn (DE); Trendafilov, Boris, 53757 Sankt Augustin (DE); Kong, Dong-Uck, 53127 Bonn (DE); Bischoff, Heike, 51143 Köln (DE); Drees, Sandra, 53639 Königswinter (DE)
(74) Vertreter: Cohausz & Florack

(56) Entgegenhaltungen:
- DE-A1-102016 106 456
- DE-A1-102017 006 537
- DE-U1-202011 109 787

## Beschreibung

Die Erfindung betrifft einen Transportwagen für Sendungen, mit einer Mehrzahl eine Aufstandsebene definierenden Rädern zum Verfahren des Transportwagens, mit einem Laderaum zur Aufnahme der Sendungen während des Transports und mit wenigstens einem Regalboden zum Tragen der Sendungen. Ferner betrifft die Erfindung ein Verfahren zum Betrieb eines solchen Transportwagens.

Transportwagen für Sendungen sind seit langer Zeit und in unterschiedlichen Ausgestaltungen bekannt. Die Transportwagen weisen einen Laderaum auf, in dem die zu transportierenden Sendungen aufgenommen und vor äußeren Einflüssen, wie etwa Regen oder einem unbefugten Zugriff, geschützt werden können. Damit die Sendungen sortiert transportiert werden können, weisen manche Transportwagen Regalböden auf, auf denen die Sendungen direkt oder in Boxen abgestellt werden können. Für das Verfahren der Transportwagen weisen diese meist vier Räder auf. Die Kontaktstellen der Räder mit dem Untergrund definieren eine Aufstandsebene des jeweiligen Transportwagens, die dem Untergrund des Transportwagens entsprechen kann, aber nicht muss.

Bei den Sendungen kann es sich um Stückgüter, umverpackte Güter, Pakete, Briefe, Zeitungen, Zeitschriften und/oder dergleichen handeln. Grundsätzlich bestehen hinsichtlich der Größe und des Gewichts der Sendungen keine Einschränkung, allerdings sind insbesondere solche Sendungen gemeint, die von einer Person ohne weitere Hilfsmittel gehoben, getragen und übergeben werden können. Dies erlaubt es einer Person, bei der es sich um einen Sendungszusteller handeln kann, die im Transportwagen mitgeführten Sendungen an bestimmten Orten, bei denen es sich um Zustellorte handeln kann, abzuliefern, insbesondere zuzustellen. Insbesondere in den Fällen, in denen die Sendungen Paketsendungen und/oder Briefsendungen sind, spricht man regelmäßig von einem Zustellen und nicht bloß von einem Abliefern, auch wenn es dabei keine bedeutenden inhaltlichen Unterschiede geben muss.

In der Vergangenheit waren die Transportwagen meist als Handkarren ausgeführt, der von dem Sendungszusteller zu den Zustellorten gezogen oder geschoben wurde, an denen die mitgeführten Sendungen abgeliefert bzw. zugestellt werden sollten. Diese Handkarren wurden später teilweise durch Transportwagen ersetzt, die über einen eigenen Antrieb verfügten. Es ist dann nicht mehr erforderlich, den Transportwagen zu ziehen oder zu schieben, um ihn von einem Zustellort zu einem anderen Zustellort zu bewegen. Allerdings muss der Transportwagen durch eine Person, etwa den Sendungszusteller, gelenkt werden, damit der motorisch angetriebene Transportwagen den Weg zum nächsten Zustellort findet. Seit kurzer Zeit sind sogar Transportwagen beschrieben worden, die autonom von einem Zustellort zu einem anderen Zustellort fahren können.

Ein Transportwagen der eingangs genannten Art ist in der DE 20 2011 109 787 U1 beschrieben.

Am Zustellort muss der Sendungszusteller die an dem jeweiligen Zustellort abzuliefernde Sendung aus dem Laderaum des Transportwagens entnehmen, um die Sendung abzuliefern. Gerade bei kleineren Sendungen oder unzureichend beschrifteten oder unzureichend gekennzeichneten Sendungen kann dies jedoch eine nicht unerhebliche Zeit in Anspruch nehmen. Da der Sendungszusteller dabei regelmäßig unter Zeitdruck steht, kann leicht versehentlich die falsche Sendung entnommen werden, die dann an einem Ort abgeliefert wird, an dem die Abgabe der Sendung nicht vorgesehen war. Zudem können mehrere Sendungen zur Abgabe an demselben Ort vorgesehen sein. Gerade bei kleineren Sendungen oder unzureichend beschrifteten oder unzureichend gekennzeichneten Sendungen kann es dann leicht passieren, dass der Sendungszusteller versehentlich nicht alle Sendungen aus dem Laderaum des Transportwagens entnimmt. Dies führt dann zu einem unvollständigen Abliefern von Sendungen an einem bestimmten Ort.

Daher liegt der vorliegenden Erfindung die Aufgabe zugrunde, den Transportwagen und das Verfahren jeweils der eingangs genannten und zuvor näher erläuterten Art derart auszugestalten und weiterzubilden, um das Abliefern von Sendungen zu beschleunigen und zuverlässiger zu gestalten.

Diese Aufgabe ist bei einem Transportwagen nach dem Oberbegriff des Anspruchs 1 dadurch gelöst, dass der wenigstens eine Regalboden von wenigstens einer unteren, im Laderaum angeordneten Nichtgebrauchsstellung in eine obere und wenigstens teilweise außerhalb des Laderaums angeordnete moderate Gebrauchsstellung und zurück verstellbar ist, dass der wenigstens eine Regalboden von wenigstens einer unteren, im Laderaum angeordneten Nichtgebrauchsstellung in eine obere und wenigstens teilweise außerhalb des Laderaums angeordnete erhöhte Gebrauchsstellung und zurück verstellbar ist, dass die moderate Gebrauchsstellung und die erhöhte Gebrauchsstellung in einem Bereich zwischen 1,0 m und 1,7 m, insbesondere 1,5 m, oberhalb der Aufstandsebene angeordnet sind, dass die erhöhte Gebrauchsstellung oberhalb der moderaten Gebrauchsstellung angeordnet ist und dass ein Antrieb zum wenigstens teilweisen Verstellen der Höhe des Regalbodens über der Aufstandsebene vorgesehen ist.

Die genannte Aufgabe ist ferner gemäß Anspruch 11 gelöst durch ein Verfahren zum Betrieb eines Transportwagens für Sendungen nach einem der Ansprüche 1 bis 10, bei dem der wenigstens eine Regalboden von wenigstens einer unteren, im Laderaum angeordneten Nichtgebrauchsstellung in eine obere und wenigstens teilweise außerhalb des Laderaums angeordnete Gebrauchsstellung in einem Abstand zwischen 1,0 m und 1,7 m, insbesondere 1,5 m, von der Aufstandsebene verstellt wird.

Die Erfindung hat erkannt, dass es langwierig und unzuverlässig ist, wenn die Sendungen vom Sendungszusteller aus dem Laderaum rausgesucht werden müssen, selbst wenn der Laderaum zur besseren Sortierung und zur besseren Zugänglichkeit wenigstens einen Ladeboden aufweist. Es ist zudem erkannt worden, dass es zweckmäßig ist, den wenigstens einen Regalboden zunächst aus einer Nichtgebrauchsstellung in dem Laderaum in eine Gebrauchsstellung wenigstens teilweise außerhalb des Laderaums zu verstellen, die zudem höher angeordnet ist als die Nichtgebrauchsstellung. Dies stellt zwar einen zusätzlichen Arbeitsschritt dar, der das Abliefern der Sendungen vermeintlich verzögert, allerdings werden die Sendungen der die Sendungen abliefernden Person dann auf einer ergonomisch günstigen Position angeboten, die das Heraussuchen der jeweils abzuliefernden Sendung erleichtert und beschleunigt. Dies ist umso mehr der Fall, da der Sendungszusteller auch kleinere Sendungen sofort erkennen kann, wobei der Sendungszusteller zudem selbst unzureichende Kennzeichnungen schnell und zuverlässig erfassen und/oder unzureichende Beschriftungen schnell und zuverlässig lesen kann. Dies führt insgesamt zu einer Beschleunigung des Ablieferns bei gleichzeitiger Verringerung der Fehleranfälligkeit.

Des Weiteren kann der wenigstens eine Regalboden in unterschiedliche Gebrauchsstellungen verstellt werden, die sich wenigstens dadurch unterscheiden, dass die Gebrauchsstellungen auf unterschiedlichen Höhen gegenüber der Aufstandsebene angeordnet sind. Dabei befindet sich die moderate Gebrauchsstellung unterhalb der erhöhten Gebrauchsstellung, wenngleich auch die moderate Gebrauchsstellung oberhalb der im Laderaum angeordneten Nichtgebrauchsstellung angeordnet ist. Mithin wird der wenigstens eine Regalboden jeweils aus einer Nichtgebrauchsstellung nach oben und teilweise aus dem Laderaum heraus bewegt. Wenn der Regalboden weiter unten im Laderaum angeordnet ist, wird ein geringer Schwerpunkt für ein stabiles Verfahren des Transportwagens bereitgestellt. Alternativ oder zusätzlich kann so auch eine platzsparende Aufnahme des Regalbodens erreicht werden, beispielsweise unterhalb eines weiteren Regalbodens. Da der Sendungszusteller in dieser niedrigen Nichtgebrauchsstellung keine Sendung vom Regalboden entnehmen muss, kann der Regalboden sehr tief angeordnet werden, ohne das Entnehmen von Sendungen zu erschweren oder ergonomische Nachteile in Kauf nehmen zu müssen. Dabei ist es besonders einfach und daher bevorzugt, wenn der wenigstens eine Regalboden aus ein und derselben Nichtgebrauchsstellung sowohl in die moderate Gebrauchsstellung als auch in die erhöhte Gebrauchsstellung verstellt werden kann. So wird auch die Flexibilität des Transportwagens erhöht. In welche Gebrauchsstellung der Regalboden jeweils verstellt wird, kann davon abhängig gemacht werden, wie groß die Person ist, die die Sendungen abzuliefern hat. Damit die Entnahme der Sendungen sehr schnell und zuverlässig erfolgen kann, muss die Sendung für die entsprechende Person sehr einfach erreichbar und sehr einfach als die abzuliefernde Sendung erkennbar sein. Daher ist bei einem kleineren Sendungszusteller die moderate Gebrauchsstellung die effektivere und auch ergonomischere, während für einen größeren Sendungszusteller die erhöhte Gebrauchsstellung effektiver und ergonomischer ist.

Vor diesem Hintergrund und der typischen Größe von Sendungszustellern ist vorgesehen, dass die moderate Gebrauchsstellung und die erhöhte Gebrauchsstellung zwischen 1,0 m und 1,7 m, insbesondere 1,5 m, oberhalb der Aufstandsebene angeordnet sind. Auf diese Weise können Personen sehr unterschiedlicher Größe dennoch sehr effizient und ergonomisch Sendungen von dem wenigstens einen Regalboden entnehmen und am Zustellort zustellen.

Um zudem sicherzustellen, dass der Regalboden vor dem Entnehmen in eine geeignete Gebrauchsstellung verstellt wird, ist ein Antrieb vorgesehen, der das Verstellen wenigstens teilweise bewirkt. Ein rein händisches Verstellen könnte dazu führen, dass der Sendungszusteller das Verstellen des wenigstens einen Regalbodens unterlässt, so dass die beschriebenen Vorteile nicht zu Tage treten. Andererseits wäre das Verstellen des wenigstens einen Regalbodens dann mit einem höheren Kraftaufwand und/oder Handlingaufwand verbunden, was zu einer weiteren Belastung des Sendungszustellers zum Abliefern der Sendungen beitragen würde.

Der besseren Verständlichkeit halber und zur Vermeidung unnötiger Wiederholungen werden nachfolgend der Transportwagen und das Verfahren zum Betrieb des Transportwagens gemeinsam beschrieben, ohne jeweils im Einzelnen zwischen dem Transportwagen und dem Verfahren zu unterscheiden. Für den Fachmann ergibt sich jedoch anhand des Kontextes, welches Merkmal jeweils hinsichtlich des Transportwagens und des Verfahrens besonders bevorzugt ist.

Bei einer ersten besonders bevorzugten Ausgestaltung des Transportwagens ist der wenigstens eine Regalboden von wenigstens einer unteren, im Laderaum angeordneten Nichtgebrauchsstellung in wenigstens drei, vorzugsweise wenigstens vier, insbesondere wenigstens fünf übereinander und wenigstens teilweise außerhalb des Laderaums angeordnete obere Gebrauchsstellungen und zurück verstellbar ist. Auf diese Weise können Personen sehr unterschiedlicher Größe die Regalböden in vielen unterschiedlichen Höhen angeboten werden. Jeder Person kann dann eine Gebrauchsstellung zugeordnet werden, die ein effizientes und zuverlässiges Entnehmen der Sendungen ermöglicht. Besonders einfach ist es verfahrensmäßig aber auch konstruktiv, wenn die Regalböden aus einer einzigen bzw. derselben Nichtgebrauchsstellung in die unterschiedlichen Gebrauchsstellungen und zurück verstellbar sind. Auch ist es zur Berücksichtigung üblicher Größen der Personen zum Abliefern die Sendungen zweckmäßig, wenn die Gebrauchsstellungen, vorzugsweise alle Gebrauchsstellungen, zwischen 0,8 m, insbesondere 1,0 m, und 1,7 m, insbesondere 1,5 m, oberhalb der Aufstandsebene angeordnet sind.

Um die Gebrauchsstellung besonders gut an unterschiedliche große Personen anpassen zu können, bietet es sich zudem an, wenigstens zwei, vorzugsweise wenigstens drei, insbesondere wenigstens vier, Gebrauchsstellungen in einem Bereich zwischen 1,1 m und 1,6 m, vorzugsweise in einem Bereich zwischen 1,2 m und 1,5 m, insbesondere zwischen 1,3 m und 1,4 m, oberhalb der Aufstandsebene anzuordnen. Je mehr Gebrauchsstellungen in einem umso kleineren Höhenbereich angeordnet werden, desto feiner und genauer lassen sich die Gebrauchsstellungen an die jeweiligen Körpergrößen der Personen zum Abliefern der Sendungen anpassen. Dabei sind zudem die Gebrauchsstellungen nicht an die angegebenen Höhenbereiche gebunden. Beispielsweise können vier Gebrauchsstellungen in einem Höhenbereich zwischen 1,2 m und 1,5 m angeordnet und zudem noch wenigstens eine Gebrauchsstellung höher und/oder niedriger vorgesehen sein. Zudem ist es grundsätzlich unabhängig von dem Höhenbereich, in dem die Gebrauchsstellungen angeordnet sind, zweckmäßig, wenn der Höhenunterschied von wenigstens einem Paar Gebrauchsstellungen gegenüber der Aufstandsebene weniger als 10 cm, vorzugsweise weniger als 7 cm, insbesondere weniger als 5 cm beträgt. Dies erlaubt eine sehr feinteilige Anpassung der Gebrauchsstellungen an die jeweilige Person zur Bedienung des Transportwagens. Vor diesem Hintergrund ist es aus demselben Grund weiter bevorzugt, wenn alle in der Höhenrichtung gegenüber der Aufstandsebene aufeinanderfolgenden Gebrauchsstellungen einen Höhenunterschied von weniger als 10 cm, vorzugsweise weniger als 7 cm, insbesondere weniger als 5 cm, aufweisen,

Um eine platzsparende Aufnahme der Sendungen im Laderaum des Transportwagens zu ermöglichen, können wenigstens zwei Regalböden jeweils in einer Nichtgebrauchsstellung übereinander angeordnet sein. Von diesem Regalboden kann dann wenigstens ein Regalboden von der im Laderaum angeordneten Nichtgebrauchsstellung in eine obere und wenigstens teilweise außerhalb des Laderaums angeordnete Gebrauchsstellung und zurück verstellbar sein. Bedarfsweise ist es zur Verringerung des konstruktiven Aufwands dabei zweckmäßig, wenn nur ein Regalboden oder nur bestimmte der übereinander angeordneten Regalböden aus der Nichtgebrauchsstellung in eine Gebrauchsstellung verstellt werden können. Dann müssen bedarfsweise die Sendungen von einem nicht verstellbaren Regalboden auf einen verstellbaren umgesetzt werden, was einfach erfolgen kann, wenn die Sendungen beispielsweise in Boxen aufgenommen sind, die auf den Regalböden stehen. Da meist in der Nichtgebrauchsstellung der untere Regalboden weniger gut erreicht werden kann als der wenigstens eine weiter oben angeordnete Regalboden, ist es zweckmäßig, wenn wenigstens oder nur der in den Nichtgebrauchsstellungen untere Regalboden von der im Laderaum angeordneten Nichtgebrauchsstellung in eine obere und wenigstens teilweise außerhalb des Laderaums angeordnete Gebrauchsstellung und zurück verstellbar ist.

Des Weiteren ist es für das Verstellen der Regalböden und das Handling der Sendungen zweckmäßig, wenn die Regalböden nicht zu groß sind. Dies lässt sich erreichen, wenn wenigstens zwei Paare von Regalböden vorgesehen sind, wobei die Regalböden jedes Paars von Regalböden jeweils in einer Nichtgebrauchsstellung übereinander angeordnet sind. Anders ausgedrückt können so mehrere Regalböden im Laderaum des Transportwagens nebeneinander und übereinander angeordnet sein. Es existieren dann mehrere Gruppen von Regalböden, die jeweils übereinander angeordnet sind. Die Gruppen von Regalböden sind dann zudem jeweils nebeneinander angeordnet. Von jeder Gruppe von übereinander angeordneten Regalböden ist dann vorzugsweise wenigstens ein Regalboden, und zwar insbesondere der in den Nichtgebrauchsstellungen jeweils untere Regalboden, von der im Laderaum angeordneten Nichtgebrauchsstellung in eine obere und wenigstens teilweise außerhalb des Laderaums angeordnete Gebrauchsstellung und zurück verstellbar. Damit muss also nicht der konstruktive Aufwand betrieben werden, alle Regalböden zwischen einer Nichtgebrauchsstellung und einer Gebrauchsstellung verstellbar vorzusehen. Wenn dies jedoch für den jeweils unteren Regalboden realisiert ist, wird dadurch kompensiert, dass der untere Regalboden weit unten und damit schlecht zugänglich positioniert werden kann, um eine platzsparende Aufnahme der Sendungen im Laderaum zu erreichen.

Um eine konstruktiv einfache und zugleich flexible Verstellung der Regalböden zu erreichen, kann die Verstellung des wenigstens einen Regalbodens in der Höhe gegenüber der Aufstandsfläche und zwischen einer Stellung im Laderaum und einer Stellung wenigstens teilweise außerhalb des Laderaums jeweils separat erfolgen. Die Höhenverstellung kann also unabhängig von der Verstellung aus dem Laderaum heraus und wieder zurück erfolgen. Dies erlaubt die Bereitstellungen zweier separater Verstellmechanismen. Allerdings bedeutet dies nicht, dass die Höhenverstellung und die seitliche Verstellung jeweils nacheinander erfolgen muss. Grundsätzlich ist auch eine überlagerte Verstellung denkbar, die grundsätzlich zu einer Beschleunigung des Verstellens beiträgt.

Einfach und zuverlässig lässt sich die seitliche Verstellung des Regalbodens auch bei beengten Platzverhältnissen erreichen, wenn der wenigstens eine Regalboden zwischen einer Stellung im Laderaum und einer Stellung wenigstens teilweise außerhalb des Laderaums andererseits schwenkbar und/oder linear verschiebbar ausgebildet ist. Mit anderen Worten wird der wenigstens eine Regalboden dann wenigstens teilweise seitlich aus dem Laderaum herausgeschwenkt und/oder wenigstens teilweise seitlich aus dem Laderaum herausgezogen. Zurück wird der Regalboden dann teilweise in den Laderaum hineingeschwenkt und/oder wenigstens teilweise in den Laderaum hineingeschoben. Das Herausziehen und das Hereinschieben des wenigstens einen Regalbodens kann dabei leicht und zuverlässig durch die Verwendung eines Schienensystems erreicht werden.

Zur wenigstens teilweisen Höhenverstellung des wenigstens einen Regalbodens kann zweckmäßigerweise ein Antrieb in Form eines pneumatischen Antriebs, eines hydraulischen Antriebs, eines elektromagnetischen Linearantriebs und/oder eines Elektromotors vorgesehen sein. Auf diese Weise kann die Höhe des wenigstens einen Regalbodens einfach und zugleich zuverlässig verstellt werden. Alternativ oder zusätzlich kann wenigstens zur teilweisen Seitenverstellung des wenigstens einen Regalbodens ein Antrieb in Form eines pneumatischen Antriebs, eines hydraulischen Antriebs, eines elektromagnetischen Linearantriebs und/oder eines Elektromotors vorgesehen sein. Im Falle eines pneumatischen Antriebs und/oder eines hydraulischen Antriebs kann wenigstens ein Pneumatikzylinder oder Hydraulikzylinder vorgesehen sein, in den unter Vergrößerung des Zylindervolumens ein Gas oder eine Flüssigkeit gedrückt werden kann. Bedarfsweise wird ein korrespondierender Zylinder zur Verstellung des Regalbodens und/oder des Zylinders zurück in die Ausgangsstellung vorgesehen. Die korrespondierenden Zylinder werden dann abwechselnd mit Gas bzw. Flüssigkeit beaufschlagt bzw. unter Druck befüllt. Je nach der Ausgestaltung des wenigstens einen Zylinders kann der wenigstens eine Regalboden angehoben oder aber seitlich verstellt werden. Das grundlegende Prinzip ist hinlänglich bekannt, weshalb weitere, eingehendere Ausführungen hierzu entbehrlich sind. Unter einem Elektromotor wird ein solcher verstanden, bei dem elektromagnetisch ein Rotor in Rotation versetzt wird, der starr mit einer Antriebswelle verbunden ist. Die Rotation der Antriebswelle kann nun sowohl für eine Höhenverstellung des wenigstens einen Regalbodens als auch für eine Verstellung des wenigstens einen Regalbodens zur Seite umgesetzt werden. Hierzu kann beispielsweise ein Getriebe und/oder ein Antriebsriemen verwendet werden. Beim Linearmotor wird dagegen ein Läufer auf einer geradlinigen oder gekrümmten Bahn bewegt, die durch den Stator definiert wird. Die Magnetfelder des Läufers und die Magnetfelder des Stators werden durch Umpolen des Stroms so kombiniert, dass der Läufer vielfach hintereinander ein Wegstück "nach vorne" gezogen und/oder gedrückt wird. Auch dieses Prinzip ist hinlänglich bekannt, so dass eine weitere, eingehendere Erläuterung entbehrlich erscheint. Die Linearmotoren ermöglichen letztlich in einfacher Weise eine Translationsbewegung des Regalbodens, und zwar in einer Hinrichtung und einer Rückrichtung bereitzustellen, sei es für die Höhenverstellung oder für die Verstellung zur Seite.

Um die Verstellung des wenigstens einen Regalbodens in eine bestimmte von mehreren Gebrauchsstellungen und zurück in wenigstens eine Nichtgebrauchsstellung zuverlässig zu bewirken, bietet sich die Verwendung einer Verstelleinrichtung an, die das Verstellen des Regalbodens in eine vorgegebene Gebrauchsstellung bewirkt. Die Verstelleinrichtung kann dabei als Steuereinrichtung verstanden werden, welche den wenigstens einen Antrieb so ansteuert dass der wenigstens eine Regalboden in die gewünschte Gebrauchsstellung verstellt wird. Das Zurückverstellen des wenigstens einen Regalbodens in wenigstens eine bestimmte Nichtgebrauchsstellung kann ebenfalls von der Verstelleinrichtung gesteuert werden. Dabei ist es besonders zweckmäßig, wenn die Verstelleinrichtung eine Gebrauchsstellung anhand von personenbezogenen Daten bestimmt und diese für die Verstellung des wenigstens einen Regalbodens vorgibt. Die personenbezogene Information kann beispielsweise die Größe des Sendungszustellers sein. Es kann aber auch eine personenbezogene Information sein, die es der Verstelleinrichtung erlaubt, den Sendungszusteller zu erkennen. Dies ist insbesondere dann ausreichend, wenn zu der jeweiligen Person die Größe oder die optimale Gebrauchsstellung in einem Datenspeicher hinterlegt ist. Die Verstelleinrichtung kann dann stets die zu der entsprechenden Person hinterlegten Daten auslesen, die dann vorgeben, in welche Gebrauchsstellung wenigstens ein Regalboden zu verstellen ist.

Zur Eingabe der personenbezogenen Daten bzw. der personenbezogenen Informationen, beispielsweise durch den Sendungszusteller selbst, kann der Transportwagen der Einfachheit halber eine Eingabeeinrichtung aufweisen. Diese kann beispielsweise eine Tastatur, ein Touchpad und/oder einen Touchscreen umfassen. So wird eine manuelle Eingabe der personenbezogenen Daten in einfacher Weise möglich. Es ist aber gegebenenfalls wünschenswert, etwa um Manipulationen zu vermeiden, dass wenigstens eine Sensoreinrichtung vorgesehen ist, welche die personenbezogenen Daten oder personenbezogenen Informationen erfasst, ohne dass eine manuelle Eingabe derselben erforderlich wäre. Die Sensoreinrichtung kann zu diesem Zweck beispielsweise einen optischen Sensor, etwa umfassend eine Kamera und/oder einen Laser, aufweisen. Der, beispielsweise optische, Sensor kann dann direkt die Größe des Sendungszustellers in einem bestimmten Bereich neben dem Transportwagen erfassen, um die Gebrauchsstellung des wenigstens einen Regalbodens an die entsprechende Köpergröße des entsprechenden Sendungszustellers anzupassen. Der, beispielsweise optische, Sensor kann aber auch charakteristische Parameter, insbesondere des Gesichts, einer Iris und/oder einer Fingerkuppe der betreffenden Person ermitteln, um auf die jeweilige Person zu schließen bzw. diese zu identifizieren. Vereinfacht gesprochen kann die Sensoreinrichtung eine Gesichtserkennung durchführen und/oder die Iris oder den Fingerabdruck des Sendungszustellers erkennen.

Alternativ oder zusätzlich kann der, beispielsweise optische, Sensor auch dazu eingesetzt werden, eine persönliche Kennung, die beispielsweise auf einer Speicherkarte oder einem Ausweis geschrieben worden ist, auszulesen. Dabei kann die persönliche Kennung beispielsweise in Form eines Barcodes gespeichert sein. Die entsprechende Person wird sich dann beispielsweise mit der Speicherkarte oder dem Ausweis der Sensoreinrichtung nähern, die die Person anhand der Speicherkarte oder des Ausweises identifiziert und es der Verstelleinrichtung ermöglicht, die geeignete Gebrauchsstellung des wenigstens einen Regalbodens auszulesen. Es kann auch vorgesehen sein, dass der Sendungszusteller die Speicherkarte oder den Ausweis in den Transportwagen einsteckt, um von der Sensoreinrichtung ausgelesen zu werden.

Dann kann beispielsweise ein Magnetstreifen, ein Radio Frequency Identification (RFID) Tag oder ein Near Field Communication (NFC) Tag auf der Speicherkarte oder dem Ausweis vorhanden sein. Der Transportwagen kann alternativ oder zusätzlich auch einen Empfänger aufweisen, der elektromagnetische Signale empfangen kann. Dies erlaubt es dem Sendungszusteller, die personenbezogenen Informationen an den Transportwagen zu senden. Dies kann grundsätzlich mittels beliebiger Funksignale erfolgen, wobei der Begriff Funk sehr breit zu verstehen sein kann. Auch kann die überbrückte Distanz sehr klein sein. Beispielsweise kann der Empfänger zum Auslesen eines Radio Frequency Identification Tags (RFID-Tag) oder eines Near Field Communication Tags (NFC-Tag) ausgebildet sein. Der Radio Frequency Identification Tag (RFID-Tag) oder der Near Field Communication Tag (NFC-Tag) kann dabei beispielsweise auf einer Speicherkarte oder einem Ausweis des Sendungszustellers vorgesehen sein. Es kann aber auch eine personenbezogene Information über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), an den Empfänger gesendet werden, der dementsprechend ausgebildet ist.

Die Höhenverstellung des wenigstens einen Regalbodens lässt sich einfach und platzsparend realisieren, wenn der wenigstens eine Regalboden von einer Teleskopstange höhenverstellbar gehalten ist. Wenn der Regalboden an einem Segment der Teleskopstange gehalten ist, kann die Höhe des Regalbodens über das Aus- und wieder Einfahren der Teleskopstange bzw. des entsprechenden Segments der Teleskopstange verändert werden. Die Verwendung einer Teleskopstange erlaubt es zudem, mehrere Regalböden an unterschiedlichen Segmenten der Teleskopstange zu halten und diese Segmente bedarfsweise unabhängig voneinander in ihrer Höhe zu verstellen. Mithin können wenigstens zwei Regalböden von unterschiedlichen, gegeneinander teleskopierbaren Segmenten der Teleskopstange gehalten sein.

Die Verwendung eines Transportantriebs zum eigenständigen Verfahren des Transportwagens erleichtert das Verfahren des Transportwagens von einem Zustellort zum nächsten Zustellort. Der Transportwagen muss dann nicht von der Person geschoben oder gezogen werden. Damit der Sendungszusteller den Transportwagen auch nicht aktiv leiten oder lenken muss, kann es weiter bevorzugt sein, wenn eine Sensor- und Steuereinrichtung zum autonomen Fahren des Transportwagens vorgesehen ist. Der Transportwagen erhält somit Informationen über seine Umgebung, auf die der Transportwagen bedarfsweise reagieren kann, und die es dem Transportwagen erlauben, seinen Weg zu finden. In einer besonderen Ausgestaltung kann der Navigationsaufwand dadurch verringert werden, dass der Transportwagen dem Sendungszusteller folgt. Der Sendungszusteller steuert dann den nächsten Zustellort so an, wie es unter den gegebenen Umständen zweckmäßig erscheint und trifft mithin die Entscheidung über die jeweilige Route. Der Transportwagen muss diese Entscheidung nicht selber treffen, sondern kann einfach dem Sendungszusteller folgen, der über viel Erfahrung bei der Wahl der Route verfügen kann.

Um die Sendungen vor äußeren Einflüssen wie Regen oder einem unberechtigten Zugriff zu schützen, kann der Transportwagen wenigstens eine Tür zum Verschließen des Laderaums aufweisen. Wenn die wenigstens eine Tür zudem derart mit der Verstelleinrichtung gekoppelt ist, dass die Verstelleinrichtung über ein Öffnen der Tür informiert wird oder dieses erkennt, kann durch das Öffnen der wenigstens einen Tür der wenigstens eine Regalboden automatisch in eine vorgegebene Gebrauchsstellung verstellt werden. Die Verstelleinrichtung weiß beispielsweise, wer der Sendungszusteller ist oder in welche Gebrauchsstellung der wenigstens eine Regalboden verstellt werden soll. Wenn die Türe geöffnet wird, ist dies das Signal, dass eine Sendung abgeliefert und der Regalboden dazu in die entsprechende Gebrauchsstellung verstellt werden soll. Daher kann der wenigstens eine Regalboden automatisch nach dem Öffnen der Tür in eine für die jeweilige Person geeignete Gebrauchsstellung verstellt werden.

Alternativ oder zusätzlich kann auch wenigstens eine Aktivierungseinrichtung, insbesondere ein Taster, mit der Verstelleinrichtung gekoppelt sein. Die Kopplung ist dann bevorzugt dergestalt, dass infolge der Aktivierung der Aktivierungseinrichtung wenigstens ein Regalboden automatisch in eine vorgegebene Gebrauchsstellung verstellt wird. Diese Aktivierungseinrichtung bietet sich beispielsweise an, wenn die entsprechende Aktivierung des wenigstens einen Regalbodens nicht durch die Öffnung der Tür eingeleitet werden soll.

Die Verstellung des wenigstens einen Regalbodens in die Gebrauchsstellung kann voraussetzen, dass zuvor wenigstens eine Tür geöffnet wird, um ein Zusammenstoßen von Regalboden und Tür zu vermeiden, während der Regalboden in die Gebrauchsstellung wenigstens teilweise außerhalb des Laderaums verstellt wird. Dies schließt aber nicht aus, dass auch bei geschlossener Tür eine Höhenverstellung des wenigstens einen Regalbodens im Laderaum des Transportwagens erfolgen kann. Um den Regalboden an einem Zustellort schneller in die gewünschte Gebrauchsstellung bewegen zu können, kann der Regalboden bereits vor dem Öffnen der Tür in der Höhe entsprechend der Gebrauchsstellung verstellt werden. Diese einleitende Höhenverstellung der Regalböden im Laderaum des Transportwagens kann durch eine Aktivierungseinrichtung, etwa in Form eines Tasters, eingeleitet werden. Die Gebrauchsstellung wird auch dann schneller erreicht, wenn ein Regalboden zwischen wenigstens zwei aufeinanderfolgenden Zustellorten nicht in seiner Höhe verstellt wird, sondern lediglich auf derselben Höhe in den Laderaum hinein und wieder aus dem Laderaum heraus geschwenkt bzw. verstellt wird. Zwischendurch kann bedarfsweise zudem eine Tür geschlossen werden. Die Verstellung des Regalbodens kann so, wenn die Vorteile überwiegen, ohne ein Zurückverstellen in die Nichtgebrauchsstellung in den Laderaum und zurück erfolgen. Bei längeren Fahrten wird eine Verstellung zurück in die untere Nichtgebrauchsstellung jedoch grundsätzlich bevorzugt sein. Die entsprechend vereinfachte Verstellung des Regalbodens kann analog durch eine Aktivierungseinrichtung, etwa in Form eines Tasters, eingeleitet werden.

Ganz grundsätzlich kann eine Höhenverstellung des wenigstens einen Regalbodens im Laderaum, das Verstellen des Regalbodens in eine Gebrauchsstellung und/oder das Verstellen des wenigstens einen Regalbodens in eine Nichtgebrauchsstellung durch eine Aktivierungseinrichtung alternativ oder zusätzlich zum Betätigen eines Tasters auch auf wenigstens eine andere Art erfolgen. Die Verstellung kann beispielsweise in Abhängigkeit von der Position des Transportwagens bewirkt werden, etwa auf der Basis der vom Transportwagen mittels Daten eines Satellitennavigationssystems wie GPS (Global Positioning System), GLONASS (Global Navigation Satellite System), Galileo und/oder Beidou bestimmten Position. Vorzugsweise ist dann bekannt, an welchen Orten die Sendungen abgeliefert werden sollen. Die Aktivierungseinrichtung kann aber auch dazu ausgebildet sein, bestimmte Gesten des Sendungszustellers zu erkennen, etwa mittels eines optischen Sensors bzw. einer Kamera, und/oder über eine Sprachsteuerung verfügen. Der Sendungszusteller kann die entsprechende Verstellung jeweils durch wenigstens eine Geste oder jeweils durch wenigstens einen Sprachbefehl einleiten, wobei unterschiedliche Verstellvorgänge durch unterschiedliche Gesten und/oder unterschiedliche Sprachbefehle eingeleitet werden können. Die Aktivierungseinrichtung kann das entsprechende Verstellen des wenigstens einen Regalbodens bedarfsweise auch einleiten, wenn der Transportwagen anhält oder für eine bestimmte Zeitspanne angehalten worden ist. Dann kann das Anhalten beispielsweise durch eine Geschwindigkeitsmessung oder eine Überwachung der Drehung wenigstens eines Rads erfasst werden. Bedarfsweise muss zusätzlich eine Zeitmessung nach dem Anhalten des Transportwagens erfolgen können. Ein kurzfristiges Anhalten, etwa zur Vermeidung einer Kollision mit einem Hindernis, führt dann nicht zwangsweise auch zu einer Verstellung des wenigstens einen Regalbodens.

Bei einer ersten besonders bevorzugten Ausgestaltung des Verfahrens zum Betrieb des Transportwagens wird der wenigstens eine Regalboden von der Gebrauchsstellung wieder zurück in die Nichtgebrauchsstellung verstellt. Dann kann der Transportwagen verfahren werden, ohne dass die Gefahr besteht, dass die Sendungen von dem wenigstens einen Regalboden herunterfallen. Am nächsten Zustellort kann dann der entsprechende, wenigstens eine Regalboden erneut in die Gebrauchsstellung verstellt werden.

Der Einfachheit halber verstellt wenigstens ein Antrieb den wenigstens einen Regalboden von der Nichtgebrauchsstellung in die Gebrauchsstellung und/oder zurück. Die Person wird dann von dieser Verstellung entbunden um muss lediglich die Sendungen abliefern. Dabei kann vorzugsweise eine Verstelleinrichtung eine von mehreren Gebrauchsstellungen festlegen und den wenigstens einen Antrieb zur Verstellung des wenigstens einen Regalbodens so ansteuern, dass der wenigstens eine Regalboden in die festgelegte Gebrauchsstellung verstellt wird. So wird sichergestellt, dass der wenigstens eine Regalboden in eine Gebrauchsstellung auf eine für die entsprechende Person angenehme Höhe verstellt wird.

Die Person kann bedarfsweise wenigstens eine personenbezogene Information über eine Eingabeeinrichtung, insbesondere eine Tastatur, ein Touchpad und/oder ein Touchscreen, eingeben. Diese personenbezogene Information ist beispielsweise die Größe der Person, so dass die Verstelleinrichtung eine Gebrauchsstellung in einer für diese Person angenehmen Höhe auswählen kann. Bedarfsweise ist die personenbezogene Information aber auch nur geeignet, die Person zu identifizieren. Dann kann die Köpergröße oder eine geeignete Gebrauchsstellung in einem Datenspeicher zu dieser personenbezogenen Information hinterlegt sein. Die Verstelleinrichtung kann dadurch die geeignete Gebrauchsstellung des wenigstens einen Regalbodens auswählen und der entsprechenden Person zuordnen. Die Verstelleinrichtung kann mithin anhand der personenbezogenen Information nach vorgegebenen Kriterien eine von mehreren Gebrauchsstellungen zum Verstellen des wenigstens einen Regalbodens auswählen.

Der Transportwagen kann auch mittels wenigstens einer Sensoreinrichtung, insbesondere mittels eines optischen Sensors, vorzugsweise in Form einer Kamera und/oder eines Lasers, personenbezogene Informationen einer Person bzw. des Sendungszustellers ermitteln. Der, beispielsweise optische, Sensor kann dann direkt die Größe des Sendungszustellers in einem bestimmten Bereich neben dem Transportwagen erfassen, um die Gebrauchsstellung des wenigstens einen Regalbodens an die entsprechende Köpergröße des entsprechenden Sendungszustellers anzupassen. Der, beispielsweise optische, Sensor kann aber auch charakteristische Parameter, insbesondere des Gesichts, einer Iris und/oder einer Fingerkuppe der betreffenden Person ermitteln, um auf die jeweilige Person zu schließen bzw. diese zu identifizieren. Vereinfacht gesprochen kann die Sensoreinrichtung eine Gesichtserkennung durchführen und/oder die Iris oder den Fingerabdruck des Sendungszustellers erkennen.

Alternativ oder zusätzlich kann der, beispielsweise optische, Sensor auch dazu eingesetzt werden, eine persönliche Kennung, die beispielsweise auf einer Speicherkarte oder einem Ausweis geschrieben worden ist, auszulesen. Dabei kann die persönliche Kennung beispielsweise in Form eines Barcodes gespeichert sein. Die entsprechende Person wird sich dann beispielsweise mit der Speicherkarte oder dem Ausweis der Sensoreinrichtung nähern, die die Person anhand der Speicherkarte oder des Ausweises identifiziert und es der Verstelleinrichtung ermöglicht, die geeignete Gebrauchsstellung des wenigstens einen Regalbodens auszulesen. Es kann auch vorgesehen sein, dass der Sendungszusteller die Speicherkarte oder den Ausweis in den Transportwagen einsteckt, um von der Sensoreinrichtung ausgelesen zu werden. Dann kann beispielsweise ein Magnetstreifen, ein Radio Frequency Identification (RFID) Tag oder ein Near Field Communication (NFC) Tag auf der Speicherkarte oder dem Ausweis vorhanden sein. Der Transportwagen kann alternativ oder zusätzlich auch einen Empfänger aufweisen, der elektromagnetische Signale empfangen kann. Dies erlaubt es dem Sendungszusteller, die personenbezogenen Informationen an den Transportwagen zu senden. Dies kann grundsätzlich mittels beliebiger Funksignale erfolgen, wobei der Begriff Funk sehr breit zu verstehen sein kann. Auch kann die überbrückte Distanz sehr klein sein. Beispielsweise kann der Empfänger zum Auslesen eines Radio Frequency Identification Tags (RFID-Tag) oder eines Near Field Communication Tags (NFC-Tag) ausgebildet sein. Der Radio Frequency Identification Tag (RFID-Tag) oder der Near Field Communication Tag (NFC-Tag) kann dabei beispielsweise auf einer Speicherkarte oder einem Ausweis des Sendungszustellers vorgesehen sein. Es kann aber auch eine personenbezogene Information über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), an den Empfänger gesendet werden, der dementsprechend ausgebildet ist.

Der wenigstens eine Regalboden kann in einfacher aber effektiver Weise von einem Segment einer Teleskopstange getragen und über die Teleskopstange bzw. das Segment der Teleskopstange auf die Höhe der Gebrauchsstellung verstellt werden. Alternativ oder zusätzlich kann der wenigstens eine Regalboden in Form eines Schlittens eines elektromagnetischen Linearantriebs, insbesondere in Form einer Stange elektromagnetisch auf die Höhe der Gebrauchsstellung verstellt werden. Die ist zuverlässig und platzsparend möglich. Es kann der wenigstens eine Regalboden aber auch pneumatisch, hydraulisch und/oder elektromotorisch auf die Höhe der Gebrauchsstellung verstellt werden, was sehr robust und kostengünstig ist.

Der wenigstens eine Regalboden kann aus demselben Grund alternativ oder zusätzlich pneumatisch, hydraulisch und/oder elektromotorisch wenigstens teilweise aus dem Laderaum heraus in die Gebrauchsstellung bewegt, insbesondere geschwenkt, werden. Diese Bewegung ist dabei der Einfachheit halber eine seitliche Bewegung und keine Höhenverstellung. Der wenigstens eine Regalboden kann alternativ aber bevorzugt zusätzlich auch pneumatisch, hydraulisch und/oder elektromotorisch wenigstens teilweise aus der Gebrauchsstellung in den Laderaum bewegt, insbesondere geschwenkt, werden. Auch hierbei werden die bereits genannten Vorteile erreicht.

Um den Sendungszusteller weiter zu entlasten, kann der Transportwagen über einen Transportantrieb selbständig verfahren werden, was in besonderem Maße zu einer Vereinfachung führt, wenn der Transportwagen über eine Sensor- und Steuereinrichtung verfügt und damit autonom verfahren werden kann. In diesem Fall kann der Transportwagen autonom einem Sendungszusteller zum nächsten Zustellort folgen bzw. den Sendungszusteller dorthin begleiten.

Wenn die Verstelleinrichtung über einen Türsensor eine Information über das Öffnen wenigstens einer Tür des Transportwagens erhält, kann die Verstelleinrichtung infolgedessen den wenigstens einen Antrieb zum Verstellen des wenigstens einen Regalbodens in eine vorbestimmte Gebrauchsstellung aktivieren, und zwar bedarfsweise ohne dass es dazu weiterer Handgriffe des Sendungszustellers bedarf. Die Verstelleinrichtung kann aber auch über eine von einer Person zu betätigende Aktivierungseinrichtung, insbesondere einen Taster, eine Information darüber erhalten, dass der wenigstens eine Regalboden in die vorbestimmte Gebrauchsstellung verstellt werden soll, und die entsprechende Verstellung des wenigstens einen Regalbodens dann über den wenigstens einen Antrieb veranlasst.

Alternativ oder zusätzlich kann das Verstellen des wenigstens einen Regalbodens durch eine Aktivierungseinrichtung in Abhängigkeit von der Position des Transportwagens, etwa auf der Basis der vom Transportwagen selbst mittels Daten eines Satellitennavigationssystems wie GPS (Global Positioning System), GLONASS (Global Navigation Satellite System), Galileo und/oder Beidou bestimmten Position erfolgen. Die Aktivierungseinrichtung kann auch dazu ausgebildet sein, bestimmte Gesten zu erkennen, etwa mittels eines optischen Sensors bzw. einer Kamera, und/oder über eine Sprachsteuerung verfügen. Alternativ oder zusätzlich kann die Aktivierungseinrichtung das Verstellen des wenigstens einen Regalbodens auch einleiten, wenn der Transportwagen anhält oder für eine bestimmte Zeitspanne angehalten worden ist. Hierzu kann eine Geschwindigkeitsmessung oder eine Überwachung der Drehung wenigstens eines Rads des Transportwagens dienlich sein. Bedarfsweise sollte zusätzlich eine Zeitmessung nach dem Anhalten des Transportwagens erfolgen können.

Nachfolgend wird die Erfindung anhand einer lediglich Ausführungsbeispiele darstellenden Zeichnung näher erläutert. In der Zeichnung zeigt
- Fig. 1A-B: einen ersten erfindungsgemäßen Transportwagen mit einem Regalboden in einer Nichtgebrauchsstellung und einer Gebrauchsstellung in einer perspektivischen Seitenansicht,
- Fig. 2A-C: das Erfassen einer personenbezogenen Information des Sendungszustellers in schematischen, perspektivischen Darstellungen,
- Fig. 3A-B: ein Detail des Transportwagens aus Fig. 1 betreffend die Einrichtung zum Verstellen des Regalbodens in einer Seitenansicht und eine Schnittansicht,
- Fig. 4A-B: ein Detail eines zweiten erfindungsgemäßen Transportwagens betreffend die Einrichtung zum Verstellen des Regalbodens mit dem Regalboden in einer Nichtgebrauchsstellung und in einer Gebrauchsstellung in schematischen Darstellungen,
- Fig. 5: einen dritten erfindungsgemäßen Transportwagen in einer perspektivischen Seitenansicht gemäß Fig. 1 und
- Fig. 6: ein erfindungsgemäßes Verfahren in einer schematischen Fließbilddarstellung.

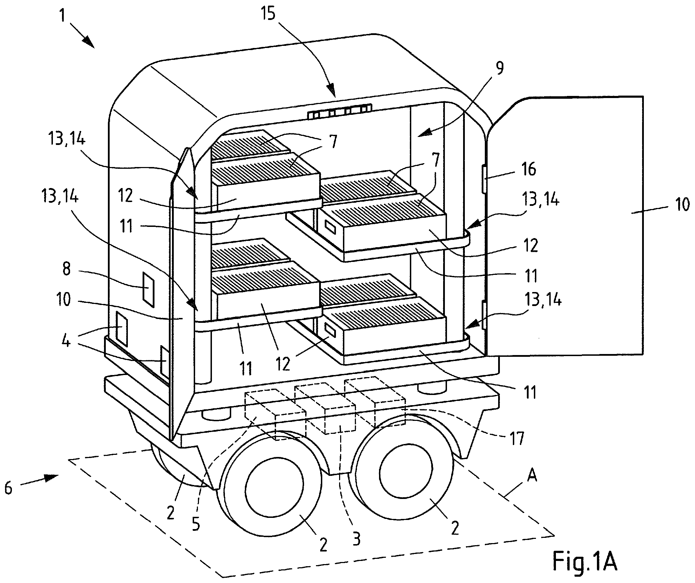

In den Fig. 1A-B ist ein Transportwagen 1 in einer Seitenansicht dargestellt. Der Transportwagen 1 verfügt über vier Räder 2, die auf dem Untergrund stehen und eine Aufstandsebene A definieren, die dem Untergrund entsprechen kann, aber nicht muss. Die Räder 2 dienen dem Verfahren des Transportwagens 1, der zum selbständigen Verfahren einen Transportantrieb 3 umfasst. Insbesondere ist der Transportantrieb 3 als elektromotorischer Antrieb ausgebildet, der über eine mitgeführte Batterie mit Strom versorgt werden kann. Der Transportwagen 1 verfügt noch über eine Reihe von Sensoren 4, welche die Umgebung des Transportwagens 1 überwachen, und eine Steuereinrichtung 5, welche der Steuerung des Transportwagens 1 dient. Die Sensoren 4 und die Steuereinrichtung 5 sind räumlich verteilt aber funktional in einer Sensor- und Steuereinrichtung 6 zusammengefasst, die es dem Transportwagen 1 bedarfsweise erlaubt, autonom, also ohne einen direkten Eingriff durch einen Benutzer, zu fahren.

Der Transportwagen 1 kann also beispielsweise nacheinander und selbständig mehrere Zustellorte anfahren, an denen vom Transportwagen 1 mitgeführte Sendungen 7 abgeliefert werden sollen. Das Abliefern kann auch als Zustellen bezeichnet werden. Jedoch ist der Transportwagen 1 vorzugsweise nicht dazu vorgesehen, die Sendungen 7 an den Zustellorten selbst abzuliefern, sondern nur die Sendungen 7 zu den Zustellorten zu bringen. An den Zustellorten können die Sendungen 7 dann von einem Sendungszusteller bzw. einer die Sendungen 7 abliefernden Person abgeliefert werden. Beispielsweise handelt es sich bei den Sendungen 7 um Briefsendungen, wie etwa Briefe Postkarten und Flyer. Diese werden vom Sendungszusteller beispielsweise in die Briefkästen eingesteckt, die zu den entsprechenden Adressaten der Sendungen 7 gehören. Da der Sendungszusteller bei dem dargestellten und insoweit bevorzugten Transportwagen 1 nicht selbst mitfahren kann, müssen der Sendungszusteller und der Transportwagen 1 von Zustellort zu Zustellort gelangen. Damit der Sendungszusteller und der Transportwagen 1 denselben Weg nehmen oder der Sendungszusteller den Weg des Transportwagens 1 wenigstens indirekt beeinflussen kann, kann der Transportwagen 1 dem Sendungszusteller von Zustellort zu Zustellort folgen. Der Transportwagen 1 weist dann wenigstens einen Sensor 8 auf, der den Sendungszusteller orten kann. Dies kann ein optischer Sensor 8 sein, der den Sendungszusteller an bestimmten Merkmalen erkennt.

Dieser wenigstens eine Sensor kann an unterschiedlichen Stellen auf dem Transportwagen 1 angebracht sein. Zudem können unterschiedliche Sensoren 8 vorgesehen sein, beispielsweise damit der Transportwagen 1 dem Sendungszusteller selbständig folgen kann, wie etwa LiDAR-Sensoren, Laser-Sensoren, UltraschallSensoren, Kameras, Radio-Frequency-Identification-Empfänger, Bluetooth-Empfänger oder Satellitennavigationssensoren, insbesondere GPS-Sensoren und/oder Galileo-Sensoren.

LiDAR (Light Detection and Ranging)-Sensoren und Laser-Sensoren, können beispielsweise den Sendungszusteller bzw. dessen Beine erkennen und diesem folgen, woraus sich die Bewegungsrichtung bzw. die Bewegungsbahn für den Transportwagen 1 ableitet. Auch Kameras können optische Merkmale des Sendungszustellers erkennen und diesen folgen. Eine Ortung des Sendungszustellers ist durch Radio-Frequency-Identification (RFID)-Empfänger oder Bluetooth-Empfänger möglich. Satellitennavigationssensoren erlauben dagegen zusätzlich oder alternativ eine Positionsbestimmung und/oder Routenbestimmung des Transportwagens 1. Um Vorteile unterschiedlicher Sensoren nutzen und kombinieren zu können, können auch mehrere der genannten Sensoren parallel eingesetzt werden.

Die Sendungen 7 werden von dem Transportwagen 1 in einem Laderaum 9 mitgeführt, der bei dem dargestellten und insoweit bevorzugten Transportwagen 1 durch zwei Türen 10 verschlossen werden kann. Eine andere Anzahl von Türen ist jedoch möglich. In der Fig. 1A sind die Türen 10 in der offenen Stellung dargestellt, um den Blick in den Laderaum 9 freizugeben. In dem Laderaum 9 sind vier Regalböden 11 untergebracht, von denen jeweils zwei Regalböden 11 übereinander angeordnet sind. Die einzelnen Paare oder Gruppen von übereinander angeordneten Regalböden 11 sind nebeneinander angeordnet. Grundsätzlich kann aber auch eine andere Anzahl von Regalböden 11 vorgesehen sein, die zudem auch noch anders angeordnet sein könnten als dies bei der beispielhaften Ausführungsform der Fig. 1A der Fall ist. Bei dem dargestellten und insoweit bevorzugten Transportwagen 1 sind die Regalböden 11 zudem so dimensioniert, dass auf ihnen jeweils zwei Boxen 12 abgestellt werden können. Vorliegend handelt es sich um sogenannte Briefbehälter, in denen hintereinander eine ganze Reihe von Briefsendungen aufgenommen sind.

Grundsätzlich könnten auf den Regalböden 11 aber auch nur eine Box 12, drei Boxen 12 oder mehr als drei Boxen 12 abgestellt werden. Auch kommen grundsätzlich andere Behälter als Boxen 12 der dargestellten Art in Frage. Insbesondere können Behälter oder Boxen 12 unterschiedlicher Größe verwendet werden, um je nach Bedarf Sendungen 7 in Form von Briefen und/oder Sendungen in Form von Paketen aufnehmen zu können. In der Fig. 1A-B ist lediglich eines von vielen möglichen Ausführungsbeispielen des Transportwagens 1 dargestellt.

Die mehreren, teilweise übereinander vorgesehenen Regalböden 11 ermöglichen es, den vorhandenen Laderaum 9 effektiv auszunutzen, so dass der Transportwagen 1 mehr Sendungen 7 mitführen kann. Über die Boxen 12 kann der Transportwagen 1 zudem schnell und einfach beladen werden, ohne dass die Briefsendungen während des Transports durcheinander geraten. Wenn der Laderaum 9 von oben bis unten mit mit Sendungen 7 gefüllten Boxen 12 beladen ist, sind manche der Boxen 12 für den Sendungszusteller recht weit unten und/oder manche Boxen 12 für den Sendungszusteller recht weit oben angeordnet. Dies ist zudem von der Körpergröße des Sendungszustellers anhängig. Dies führt dazu, dass es sehr aufwendig und unbequem wäre, die Sendungen 7 aus den Boxen 12 zu entnehmen, wie sie ursprünglich eingeladen worden sind.

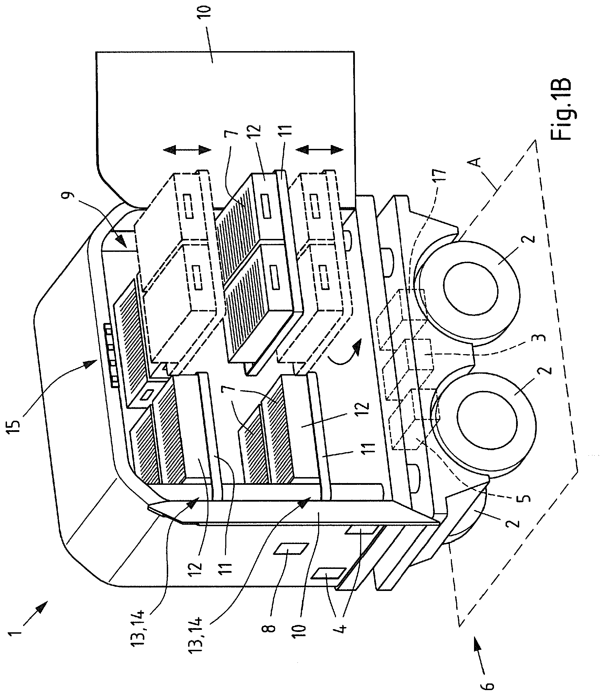

Daher können die beiden unteren Regalböden 11, aus der in der Fig. 1A dargestellten unteren, im Laderaum 9 angeordneten Nichtgebrauchsstellung in weiter oben angeordnete und wenigstens teilweise außerhalb des Laderaums 9 angeordnete Gebrauchsstellungen verstellt werden. Diese Gebrauchsstellungen sind in der Fig. 1B dargestellt, wobei eine der Gebrauchsstellungen, nämlich die untere Gebrauchsstellung, mit gestrichelten Linien dargestellt ist, da der Regalboden 11 zu einem Zeitpunkt jeweils nur in einer Gebrauchsstellung angeordnet sein kann. Bei dem dargestellten und insoweit bevorzugten Transportwagen 1 können auch die oberen Regalböden 11 von einer unteren, im Laderaum 9 angeordneten Nichtgebrauchsstellung in weiter oben angeordnete und wenigstens teilweise außerhalb des Laderaums 9 angeordnete Gebrauchsstellungen verstellt werden. Dies ist in der Fig. 1B für den Regalboden 11 rechts oben dargestellten, wobei dessen Nichtgebrauchsstellung mit durchgezogenen Linien und dessen Gebrauchsstellung mit gestrichelten Linien dargestellt sind. Es könnte aber auch eine reine Höhenverstellbarkeit der oberen Regalböden 11 ausreichen oder bedarfsweise ganz auf eine Verstellbarkeit der oberen Regalböden 11 verzichtet werden.

Von den beiden Gebrauchsstellungen der unteren Regalböden 11 kann die untere Gebrauchsstellung als die moderate Gebrauchsstellung und die obere Gebrauchsstellung als die erhöhte Gebrauchsstellung bezeichnet werden. Es könnten zudem auch noch weitere Gebrauchsstellungen vorgesehen sein. In jeder der Gebrauchsstellungen ist es für einen Sendungszusteller einfacher, die als nächstes abzuliefernden Sendungen 7 zu entnehmen. Einerseits muss der Sendungszusteller sich nicht so weit nach unten bücken. Andererseits muss der Sendungszusteller nicht in den Laderaum 9 eingreifen, in dem wenig Platz zur Verfügung steht, um die gewünschten Sendungen 7 zu entnehmen. Die Sendungen 7 werden dem Sendungszusteller vielmehr erhöht und neben dem Laderaum 9 präsentiert, so dass der Sendungszusteller die Sendungen 7 bequem und auch dann zuverlässig entnehmen kann, wenn diese unzureichend gekennzeichnet oder unzureichend beschriftet sind. Wie bequem die Entnahme der Sendungen 7 jedoch im Einzelnen ist, hängt stark von der jeweiligen Körpergröße des Sendungszustellers ab.

Um dem Umstand Rechnung zu tragen, dass die den Transportwagen 1 nacheinander bedienenden Sendungszusteller bedarfsweise sehr unterschiedliche Körpergrößen aufweisen können, können die Regalböden 11 des dargestellten und insoweit bevorzugten Transportwagens 1 jeweils in wenigstens zwei unterschiedliche Gebrauchsstellungen verstellt werden, die sich im Wesentlichen dadurch unterscheiden, dass die Gebrauchsstellungen auf unterschiedlichen Höhen gegenüber der Aufstandsfläche angeordnet sind. Die beiden in der Fig. 1B dargestellten Gebrauchsstellungen des unteren Regalbodens 11 sind jeweils mehr als 1,0 m und jeweils unterhalb von 1,7 m, insbesondere 1,5 m, angeordnet, um vielen unterschiedlichen Sendungszustellern die Regalböden 11 jeweils auf einer geeigneten Höhe präsentieren zu können.

Wenn zwei Regalböden 11 übereinander angeordnet sind, kann beispielsweise der obere Regalboden 11 nicht in der Höhe verstellt, sondern lediglich zur Seite aus dem Laderaum 9 heraus oder gar nicht verstellt werden. Der obere Regalboden 11 ist dabei unter Umständen auch ohne Höhenverstellbarkeit hinreichend bequem zu erreichen. Oder es müssen die Boxen 12 des oberen Regalbodens 11 und des unteren Regalbodens 11 getauscht werden, insbesondere, wenn die Boxen 12 des unteren Regalbodens 11 geleert worden sind. Die oberen Regalböden 11 können dann zusätzliche Boxen 12 mitführen, die dann zum Einsatz kommen, wenn andere Boxen 12 geleert sind und gegen volle Boxen 12 ausgetauscht werden sollen.

Um die Bequemlichkeit für den Sendungszusteller weiter zu erhöhen, muss der Sendungszusteller die Regalböden 11 nicht eigenhändig aus der Nichtgebrauchsstellung in die für den jeweiligen Sendungszusteller geeignete Gebrauchsstellung verstellen. Dies erfolgt wenigstens in Teilen durch einen Antrieb 13,14, der den Regalböden 11 zugeordnet ist. Bei dem dargestellten und insoweit bevorzugten Transportwagen 1 wird das Verstellen von der Nichtgebrauchsstellung bis in die jeweilige Gebrauchsstellung und zurück durch mehrere Antriebe 13,14 bewirkt. Um das Verstellen eines bestimmten Regalbodens 11 von der Nichtgebrauchsstellung in eine Gebrauchsstellung zu initiieren, kann der Sendungszusteller eine Aktivierungseinrichtung 15 in Form eines Tasters betätigen, wobei die Aktivierung nur dann freigegeben wird, wenn die zugehörige Tür 10 offen steht, da der Regalboden 11 ansonsten nicht in die Gebrauchsstellung verstellt werden kann. Zudem kann jedem Regalboden 11 eine separate Aktivierungseinrichtung 15 in Form eines Tasters zugeordnet sein. Wenn dies gewünscht ist, kann jedoch auch ein Sensor 16 verbaut werden, der erfasst, wenn eine Tür 10 in ihre geöffnete Stellung gebracht worden ist. Dann kann von dem Sensor 16 ein Signal weitergegeben werden, das den Antrieb aktiviert um den der entsprechenden Tür 10 zugeordneten Regalboden 11 aus der Nichtgebrauchsstellung in eine Gebrauchsstellung zu verstellen. Dann ist es aber dennoch zweckmäßig, wenn eine Aktivierungseinrichtung 15 in Form eines Tasters vorgesehen ist, um durch eine entsprechende Aktivierung bzw. Betätigung das Zurückverstellen des Regalbodens 11 aus der Gebrauchsstellung in die Nichtgebrauchsstellung zu bewirken.

Hierbei ist zu berücksichtigen, dass die Verstellung des wenigstens einen Regalbodens 11 in die Gebrauchsstellung regelmäßig erfordert, dass wenigstens eine Tür 10 geöffnet ist, um ein Zusammenstoßen von Regalboden 11 und Tür 10 zu vermeiden. Dies bedeutet aber nicht, dass bei geschlossener Tür 10 keine Höhenverstellung des wenigstens einen Regalbodens 11 erfolgen kann. So kann, beispielsweise um Zeit zu sparen, bereits vor dem Öffnen der Tür 10 der Regalboden 11 in der Höhe verstellt werden. Wenn die Tür 10 dann geöffnet wird, kann der Regalboden 11 schneller in die gewünschte Gebrauchsstellung bewegt werden. Auch für diese einleitende Höhenverstellung der Regalböden 11 im Transportwagen 1 bei geschlossener Tür 10 kann eine Aktivierungseinrichtung 15, etwa in Form eines Tasters, vorgesehen sein.

Es kann alternativ oder zusätzlich vorgesehen sein, dass der wenigstens eine Regalboden 11 zwischen wenigstens zwei aufeinanderfolgenden Zustellorten nicht in seiner Höhe verstellt wird. Der Regalboden 11 wird dann beispielsweise aus der Gebrauchsstellung auf derselben Höhe zurück in den Laderaum 9 des Transportwagens 1 verstellt. Die Tür 10 kann dann geschlossen werden. Am nächsten Zustellort kann der Regalboden 11 dann wieder nach außen in die Gebrauchsstellung verstellt werden. Dies kann insbesondere dann zweckmäßig sein, wenn die Zustellorte sehr nahe beieinanderliegen. Eine sehr aufwendige Verstellung des Regalbodens 11 ist dann nicht immer erforderlich und kann beispielsweise durch ein bloßes Raus- und Reinschwenken des Regalbodens 11 ersetzt werden. Auch zum Bewirken einer derart vereinfachten Verstellung eines Regalbodens 11 kann eine Aktivierungseinrichtung 15, etwa in Form eines Tasters, vorgesehen sein.

Alternativ oder zusätzlich kann die Aktivierungseinrichtung 15 die Höhenverstellung des wenigstens einen Regalbodens 11 im Laderaum 9 und/oder das Verstellen des Regalbodens 11 in die Gebrauchsstellung und/oder die Nichtgebrauchsstellung in Abhängigkeit der Position des Transportwagens 1 bewirken. Die Position des Transportwagens 1 kann der Transportwagen 1 dabei beispielsweise selbständig mittels Daten eines Satellitennavigationssystems wie GPS (Global Positioning System), GLONASS (Global Navigation Satellite System), Galileo und/oder Beidou ermitteln. Dies ist insbesondere dann zweckmäßig, wenn bekannt ist, an welchen Orten die Sendungen 7 abgeliefert werden sollen. Grundsätzlich könnte die Aktivierungseinrichtung 15 alternativ oder zusätzlich auch dazu ausgebildet sein, bestimmte Gesten zu erkennen, und/oder über eine Sprachsteuerung verfügen. Die entsprechende Verstellung des wenigstens einen Regalbodens 11 kann dann vom Sendungszusteller SZ durch wenigstens eine Geste, bedarfsweise entsprechende Gesten, und/oder wenigstens einen Sprachbefehl, insbesondere entsprechende Sprachbefehle, eingeleitet werden. Wenn der Transportwagen 1 beispielsweise die Geschwindigkeit oder die Drehung wenigstens eines Rads 2 erfasst, kann die Aktivierungseinrichtung 15 alternativ oder zusätzlich erkennen, wenn der Transportwagen 1 anhält, und in diesem Falle die Verstellung des wenigstens einen Regalbodens 11 bewirken. Zudem kann die Aktivierungseinrichtung 15 die Zeit erfassen, die der Transportwagen 1 stillsteht, und die Verstellung des wenigstens einen Regalbodens 11 erst dann bewirken, wenn der Transportwagen 1 eine bestimmte Zeitspanne gestanden hat. Ein kurzfristiges Anhalten des Transportwagens 1, etwa zur Vermeidung einer Kollision mit einem Hindernis, führt dann nicht zwangsweise auch zu einer Verstellung des wenigstens einen Regalbodens 11.

Es könnte vorgesehen sein, dass sich der Sendungszusteller SZ jeweils aussucht, in welche Gebrauchsstellung ein bestimmter Regalboden 11 verstellt werden soll. Dies könnte etwa durch das Betätigen einer entsprechenden Aktivierungseinrichtung 15 erfolgen. Beispielsweise könnte für jede Gebrauchsstellung eines Regalbodens 11 eine separate Aktivierungseinrichtung 15, insbesondere ein separater Taster, vorgesehen sein. Dies ist jedoch mit einem zusätzlichen Aufwand verbunden und stellt zudem nicht sicher, dass der Sendungszusteller immer die für ihn günstigste, weil ergonomischste Gebrauchsstellung auswählt. Dies führt zu einer erhöhten Belastung für den Sendungszusteller. Deshalb ist bei dem dargestellten und insoweit bevorzugten Transportwagen 1 eine Verstelleinrichtung 17 vorgesehen, die den wenigstens einen Antrieb 13,14 so ansteuert, dass der entsprechende Regalboden 11 in eine für den Sendungszusteller geeignete Gebrauchsstellung verstellt wird. Die Gebrauchsstellung wird also von der Verstelleinrichtung 17 und nicht von dem Sendungszusteller ausgewählt. Damit die Verstelleinrichtung 17 die für den jeweiligen Sendungszusteller ergonomischste Gebrauchsstellung auswählen kann, muss die Verstelleinrichtung 17 zunächst eine personenbezogene Information des jeweiligen Sendungszustellers erhalten.

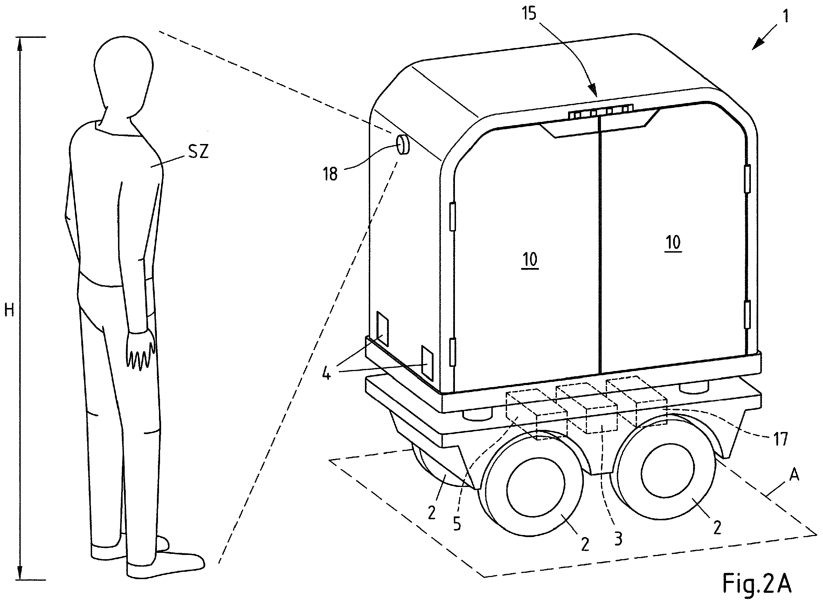

Besonders bequem ist es, wie dies in der Fig. 2A dargestellt ist, wenn der Sendungszusteller S vor der Benutzung des Transportwagens 1 von einem Scanner 18 des Transportwagens 1 gescannt wird, so dass der Transportwagen 1 die Körpergröße des entsprechenden Sendungszustellers SZ erfassen kann. Dazu muss sich der Sendungszusteller SZ beispielsweise an eine bestimmte Stelle neben den Transportwagen 1 stellen und den Scanvorgang auslösen. Wenn die Körpergröße H des Sendungszustellers erfasst ist, kann die Verstelleinrichtung 17 anhand dieser personenbezogenen Information die geeignetste von mehreren Gebrauchsstellungen auswählen. Es kann aber alternativ oder zusätzlich auch vorgesehen sein, dass der Sendungszusteller SZ selbst die personenbezogenen Daten bzw. personenbezogenen Informationen eingibt, die für die Auswahl einer geeigneten Gebrauchsstellung erforderlich sind.

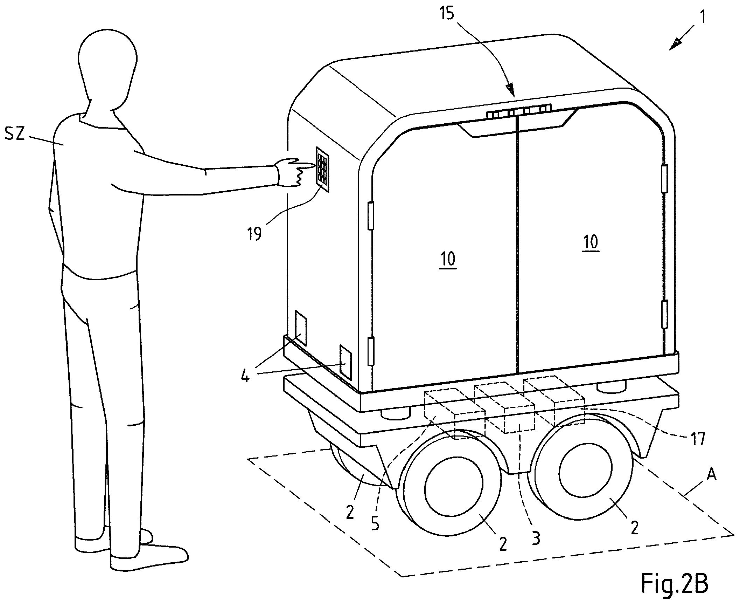

Dies kann beispielsweise, wie dies in der Fig. 2B dargestellt ist, über eine Eingabeeinrichtung 19 geschehen, die eine Tastatur, ein Touchpad und/oder einen Touchscreen umfassen kann. Um beispielsweise fehlerhafte Eingaben zu verhindern, kann auch eine Sensoreinrichtung vorgesehen werden, die die personenbezogenen Daten oder Informationen selbständig erfassen kann. Besonders zweckmäßig aber nicht zwingend kann ein optischer Sensor eingesetzt werden, der eine Kamera und/oder einen Laser umfassen kann. Ein geeigneter Sensor kann beispielsweise direkt die Größe des Sendungszustellers SZ in einem bestimmten Bereich neben dem Transportwagen 1 oder auch charakteristische Parameter des Sendungszustellers SZ erfassen. Letzteres erlaubt eine Identifikation des Sendungszustellers, während bei Ersterem eine Identifikation als solche entbehrlich ist. Ist der Sendungszusteller SZ identifiziert, kann aus einem Datenspeicher eine zum Sendungszusteller SZ zugehörige Information ausgelesen werden, die bestimmt, in welche Gebrauchsstellung der wenigstens eine Regalboden 11 zu verstellen ist. Es kann aber auch direkt die Gebrauchsstellung als solche im Datenspeicher abgelegt sein. Ein charakteristischer Parameter des Sendungszustellers SZ kann dessen Gesicht, dessen Iris und/oder dessen Fingerkuppe betreffenden, da entsprechende Parameter die jeweilige Person zuverlässig identifizieren.

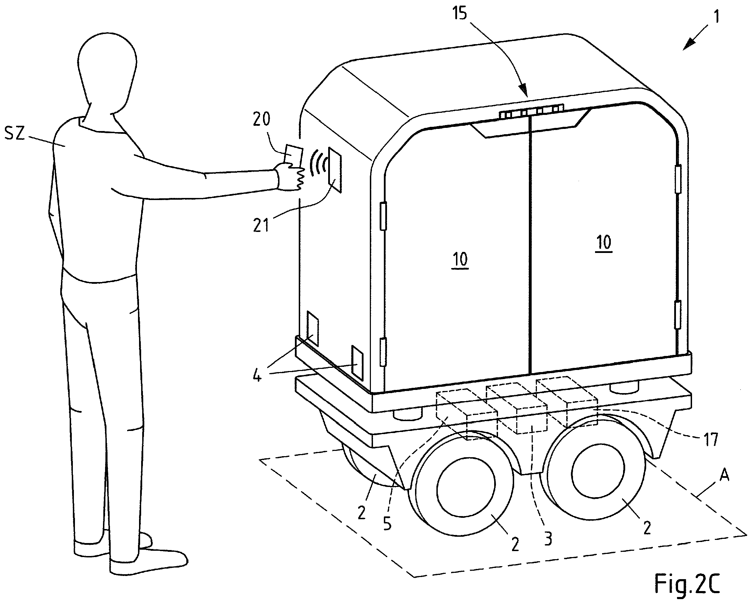

Wie dies in der Fig. 2C dargestellt ist, kann auch eine persönliche Kennung auf einer Speicherkarte 20 oder einem Ausweis von einer Sensoreinrichtung 21 ausgelesen werden. Dabei bieten sich beispielsweise Barcodes zum Speichern und Auslesen einer personenbezogenen Information an. Grundsätzlich ist es unabhängig, ob die Information über die Entfernung ausgelesen wird, oder ob die Speicherkarte 20 oder der Ausweis in den Transportwagen 1 eingeschoben werden muss. Der Sendungszusteller SZ kann die entsprechende personenbezogene Information auch an einen Empfänger senden bzw. von einem Empfänger empfangen lassen. Hierzu können Magnetstreifen, Radio Frequency Identification (RFID) Tags oder ein Near Field Communication (NFC) Tag, ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), genutzt werden, wie dies grundsätzlich in anderen Zusammenhängen bekannt ist.

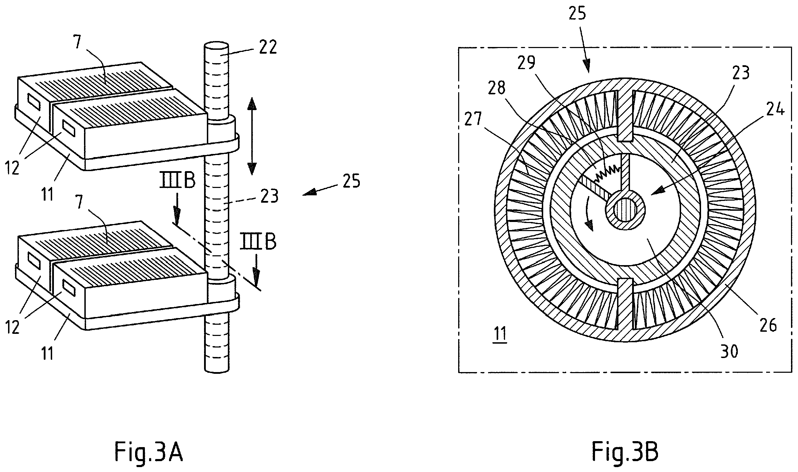

Zum Verstellen des wenigstens einen Regalbodens 11 in die Gebrauchsstellungen kommen grundsätzlich unterschiedliche konstruktive Lösungen in Frage. In den Fig. 3A-B ist die Lösung des in der Fig. 1 dargestellten und insoweit bevorzugten Transportwagens 1 dargestellt. Diese umfasst eine Stange 22, die über ihre Höhenerstreckung mit magnetischen Segmenten 23 ausgestattet ist und dabei den Stator 24 eines Linearantriebs 25 bildet. Der Regelboden 11 umgreift die Stange 22 im Sinne eines Läufers 26, mit einer Spule 27 mit Wicklungen um den Stator 24 herum, die in unterschiedliche Richtung von Strom durchflossen werden können, um den Regalboden 11 entlang der Stange 22 gezielt rauf und runter zu verfahren. In diesem Fall können zwei oder mehr Regalböden 11 vorgesehen sein und abhängig voneinander so verstellt werden, dass sich die Regalböden 11 gegenseitig nicht stören. Zum Verfahren des Transportwagens 1 können beispielsweise die Regalböden 11 so weit unten wie möglich angeordnet sein, um den Schwerpunkt zu senken. Wird dagegen ein Regalboden 11 in die Gebrauchsstellung verstellt, der nicht der oberste Regalboden 11 von mehreren an einer Stange vorgesehenen Regalböden 11 ist, so kann der oberste so weit nach oben verstellt werden, um es einem darunter liegenden Regalboden 11 zu ermöglichen, in die gewünschte Gebrauchsstellung verstellt zu werden. Dann kann der Regelboden 11 einerseits entlang der Stange 22 angehoben und separat um die Stange 22 geschwenkt werden. Dies kann beispielsweise pneumatisch oder hydraulisch erfolgen, indem in einen Zylinder 28 Gas oder Flüssigkeit eingepresst wird, so dass der Regalboden 11 geschwenkt wird. Dies kann gegen eine Rückstellkraft eines Federmittels 29 erfolgen, um den Regalboden 11 wieder zurück in den Laderaum 9 zu schwenken. Alternativ kann aber auch das Gas oder die Flüssigkeit aus dem Zylinder 28 abgesaugt werden. Denkbar ist auch, dass ein Gegenzylinder 30 mit Gas oder Flüssigkeit beaufschlagt wird, um den Regalboden 11 zurückzuschwenken und das Gas bzw. die Flüssigkeit aus dem anderen Zylinder 28 zu verdrängen. Wenn übereinander und entlang der Stange 22 mehrere Zylinder 25 vorgesehen sind, ergeben sich Segmente 23, die separat geschwenkt werden können, je nachdem, in welche Gebrauchsstellung der Regalboden 11 geschwenkt werden soll bzw. auf welche Höhe der Regelboden 11 zuvor angehoben worden ist.

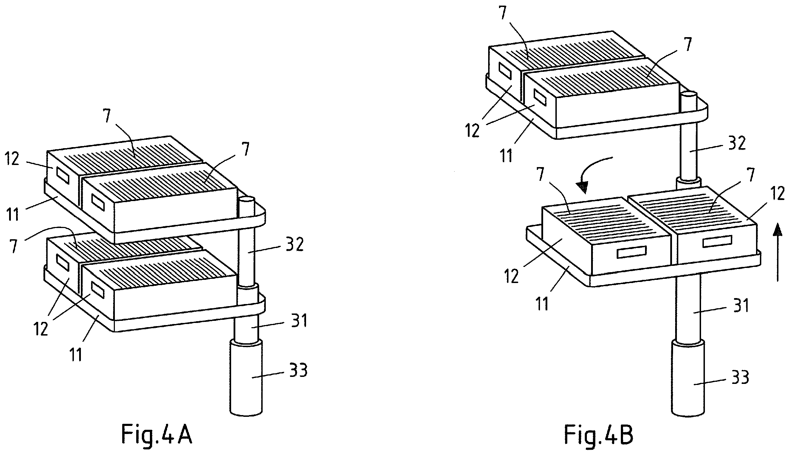

In den Fig. 4A-B ist eine alternative Verstellungsmöglichkeit des wenigstens einen Regalbodens 11 dargestellt. Es sind zwei Regalböden 11 übereinander an unterschiedlichen Segmenten 31,32 einer Teleskopstange 33 festgelegt. Die Segmente 31,32 der Teleskopstange 33 können dabei entweder unabhängig voneinander oder wenigstens teilweise abhängig voneinander verstellt werden. Bedarfsweise wird beim Anheben des unteren teleskopierbaren Segments 31, auch das obere teleskopierbare Segment 32 angehoben, während jedoch das obere telekopierbare Segment 32 ohne das untere teleskopierbare Segment 31 abgesenkt werden kann. So kann beispielweise immer der obere Regalboden 11 nach oben aus dem Weg fahren, damit der untere Regalboden 11 in die gewünschte Gebrauchsstellung verstellt werden kann. Während des Fahrens des Transportwagens 1, können die Regalböden 11 aber wieder so weit wie möglich nach unten verstellt werden, um einen tiefen Schwerpunkt bereitzustellen. Das Verstellen, insbesondere das Schwenken, der Regalböden 11 zur Seite in die Gebrauchsstellung wenigstens teilweise außerhalb des Laderaums erfolgt bedarfsweise wie dies bereits im Zusammenhang mit den Fig. 3A-B beschrieben worden ist. Anstelle der Segmente 23 des Stators 24 können dagegen die einzelnen Segmente 31,32 der Teleskopstange 33 gedreht bzw. geschwenkt werden.

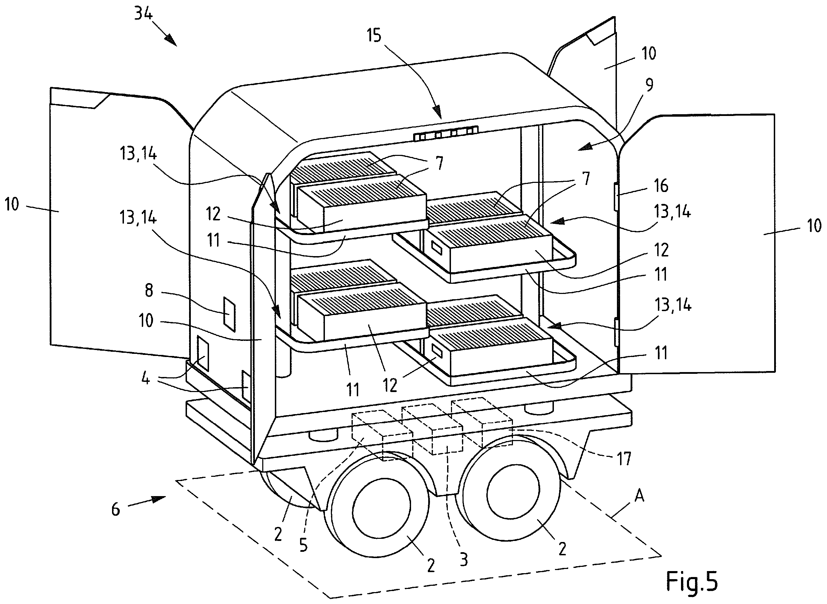

In der Fig. 5 ist ein Transportwagen 34 in einer Seitenansicht dargestellt, der dem in den Fig. 1A-B dargestellten Transportwagen 1 sehr stark ähnelt, weshalb gleiche Bauteile auch mit gleichen Bezugszeichen versehen sind. Der Transportwagen 34 weist im Unterschied zum Transportwagen 1 der Fig. 1A-B Türen 10 auf gegenüberliegenden Seiten des Laderaums 9 auf. Vorliegend sind auf jeder Seite des Laderaums 9 jeweils zwei Türen 10 vorgesehen, obwohl auch jede andere Anzahl an Türen denkbar wäre. Zum Verstellen des wenigstens einen Regalbodens 11 in die Gebrauchsstellungen kommen auch hier beispielsweise Stangen 22 in Frage, die aber anders angeordnet sind, um ein Verstellen der Regalböden 11 wahlweise zu beiden gegenüberliegenden Seiten aus dem Laderaum 9 heraus zu ermöglichen. Bei dem Transportwagen 34 können also zu beiden Seiten des Laderaums 9 Gebrauchsstellungen für die Regalböden 11 vorgesehen sein. Die eigentliche Verstellung der Regalböden 11 bleibt aber bedarfsweise ansonsten vom Prinzip her unverändert, beispielsweise wie zuvor bereits beschrieben. Damit die Regelböden 11 bedarfsweise zu beiden Seiten aus dem Laderaum 9 in jeweils wenigstens eine Gebrauchsstellung herausbewegt werden können, ist die Stange 22 bei dem Transportwagen 34 mittig in Bezug auf die beiden Seiten des Laderaums 9 angeordnet. Zudem wird zwischen den Stangen 22 und den zugeordneten Seitenwänden des Laderaums 9, an denen vorzugsweise keine Türen 10 vorgesehen sind, ein größerer Abstand benötigt, um ein problemloses Verstellen der Regalböden 11 sicherzustellen. Von einer entsprechend zentralen Anordnung der Stangen 22 könnte aber abgewichen werden, wenn die Regalböden 11 einer Stange 22 nur zum Herausbewegen aus einer Seite des Laderaums 9 und die Regalböden einer anderen Stange 22 zum Herausbewegen aus der anderen Seite des Laderaums 9 vorgesehen sind. Dies wäre zwar gegebenenfalls konstruktiv bevorzugt, würde aber die Flexibilität hinsichtlich der Verwendung des Transportwagens 34 einschränken.

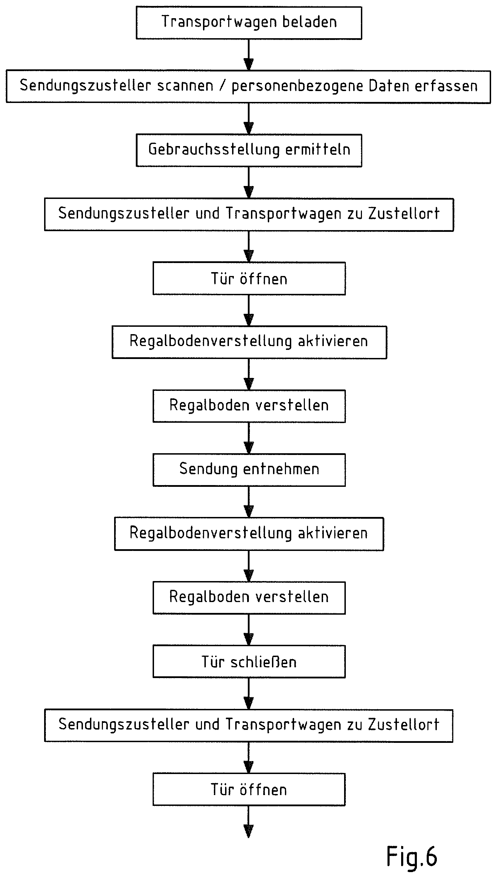

In der Fig. 6 ist schematisch ein mögliches Verfahrensschema dargestellt. Zunächst wird der Transportwagen 1 mit Sendungen 7 beladen. Dann wird entweder der Sendungszusteller SZ zum Abliefern der Sendungen 7 mit einem Scanner gescannt oder der Sendungszusteller SZ lässt personenbezogene Daten von einem Sensor oder Empfänger erfassen. Danach kann eine Verstelleinrichtung 17 anhand der Größe eine geeignete Gebrauchsstellung für wenigstens einen Regalboden 11 bestimmen. Alternativ kann die personenbezogene Information schon der gewünschten Gebrauchsstellung entsprechen oder die personenbezogene Information dient der Verstelleinrichtung 17, die geeignete Gebrauchsstellung aus einem Datenspeicher auszulesen. Der Sendungszusteller SZ bewegt sich anschließend zu einem Zustellort, wobei der Transportwagen 1 dem Sendungszusteller SZ autonom folgt. An dem Zustellort angekommen, öffnet der Sendungszusteller SZ eine Tür 10 des Laderaums 9 des Transportwagens 1 und betätigt eine Aktivierungseinrichtung 15 in Form eines Tasters. Die Verstelleinrichtung 17 erhält eine entsprechende Information über die Aktivierung und steuert nun wenigstens einen Antrieb zum Verstellen eines bestimmten Regalbodens aus der unteren, im Laderaum 9 angeordneten Nichtgebrauchsstellung in eine bestimmte obere, wenigstens teilweise außerhalb des Laderaums angeordnete Gebrauchsstellung. Der Sendungszusteller SZ entnimmt nun von dem Regalboden 11 wenigstens eine Sendung und liefert diese am Zustellstellort ab. Nach dem Entnehmen der Sendung betätigt der Sendungszusteller SZ die Aktivierungseinrichtung 15 erneut. Die Verstelleinrichtung 17 erhält hierüber eine Information und steuert den wenigstens einen Antrieb so, dass der Regalboden 11 wieder in die Nichtgebrauchsstellung verstellt wird. Anschließend kann der Sendungszusteller SZ die Tür 10 des Laderaums 9 wieder schließen und zu einem nächsten Zustellort gehen. Dabei folgt der Transportwagen 1 dem Sendungszusteller SZ. Am nächsten Zustellort wird der Sendungszusteller SZ wieder die Tür 10 öffnen und die weiteren, zuvor beschriebenen Tätigkeiten ausführen.

### Bezugszeichenliste

- 1: Transportwagen
- 2: Rad
- 3: Transportantrieb
- 4: Sensor
- 5: Steuereinrichtung
- 6: Sensor- und Steuereinrichtung
- 7: Sendung
- 8: Sensor
- 9: Laderaum
- 10: Tür
- 11: Regalboden
- 12: Box
- 13,14: Antrieb
- 15: Aktivierungseinrichtung
- 16: Sensor
- 17: Verstelleinrichtung
- 18: Scanner
- 19: Eingabeeinrichtung
- 20: Speicherkarte
- 21: Sensoreinrichtung
- 22: Stange
- 23: Segment
- 24: Stator
- 25: Linearantrieb
- 26: Läufer
- 27: Spule
- 28: Zylinder
- 29: Federmittel
- 30: Zylinder
- 31,32: Segment
- 33: Teleskopstange
- 34: Transportwagen

- A: Aufstandsebene
- SZ: Sendungszusteller

## Patentansprüche

1. Transportwagen (1,34) für Sendungen (7), mit einer Mehrzahl eine Aufstandsebene (A) definierenden Rädern (2) zum Verfahren des Transportwagens (1,34), mit einem Laderaum (9) zur Aufnahme der Sendungen (7) während des Transports und mit wenigstens einem Regalboden (11) zum Tragen der Sendungen (7),
**dadurch gekennzeichnet, dass**
der wenigstens eine Regalboden (11) von wenigstens einer unteren, im Laderaum (9) angeordneten Nichtgebrauchsstellung in eine obere und wenigstens teilweise außerhalb des Laderaums (9) angeordnete moderate Gebrauchsstellung und zurück verstellbar ist, dass der wenigstens eine Regalboden (11) von wenigstens einer unteren, im Laderaum (9) angeordneten Nichtgebrauchsstellung in eine obere und wenigstens teilweise außerhalb des Laderaums (9) angeordnete erhöhte Gebrauchsstellung und zurück verstellbar ist, dass die moderaten Gebrauchsstellung und die erhöhte Gebrauchsstellung in einem Bereich zwischen 1,0 m und 1,7 m, insbesondere 1,5 m, oberhalb der Aufstandsebene (A) angeordnet sind, dass die erhöhte Gebrauchsstellung oberhalb der moderaten Gebrauchsstellung angeordnet ist und dass ein Antrieb (13,14) zum wenigstens teilweisen Verstellen der Höhe des Regalbodens (11) über der Aufstandsebene (A) vorgesehen ist.

2. Transportwagen nach Anspruch 1,
**dadurch gekennzeichnet, dass**
der wenigstens eine Regalboden (11) von wenigstens einer unteren, im Laderaum (9) angeordneten Nichtgebrauchsstellung in wenigstens drei, vorzugsweise wenigstens vier, insbesondere wenigstens fünf übereinander und wenigstens teilweise außerhalb des Laderaums (9) angeordnete obere Gebrauchsstellungen und zurück verstellbar ist und/oder dass wenigstens zwei, vorzugsweise wenigstens drei, insbesondere wenigstens vier, Gebrauchsstellungen in einem Bereich zwischen 1,1 m und 1,6 m, vorzugsweise in einem Bereich zwischen 1,2 m und 1,5 m, insbesondere zwischen 1,3 m und 1,4 m, oberhalb der Aufstandsebene (A) angeordnet sind und/oder dass der Höhenunterschied von wenigstens einem Paar Gebrauchsstellungen gegenüber der Aufstandsebene (A) weniger als 15 cm, vorzugsweise weniger als 12 cm, insbesondere weniger als 7 cm ist.

3. Transportwagen nach Anspruch 1 oder 2,
**dadurch gekennzeichnet, dass** wenigstens zwei Regalböden (11) jeweils in einer Nichtgebrauchsstellung übereinander angeordnet sind und, vorzugsweise, wenigstens ein Regalboden (11), insbesondere der in den Nichtgebrauchsstellungen untere Regalboden (11), von der im Laderaum (9) angeordneten Nichtgebrauchsstellung in eine obere und wenigstens teilweise außerhalb des Laderaums (9) angeordnete Gebrauchsstellung und zurück verstellbar ist und/oder dass wenigstens zwei Paare von Regalböden (11) vorgesehen und die Regalböden (11) jedes Paars von Regalböden (11) jeweils in einer Nichtgebrauchsstellung übereinander angeordnet sind und, vorzugsweise, wenigstens ein Regalboden (11), insbesondere der in den Nichtgebrauchsstellungen untere Regalboden (11), von der im Laderaum (9) angeordneten Nichtgebrauchsstellung in eine obere und wenigstens teilweise außerhalb des Laderaums (9) angeordnete Gebrauchsstellung und zurück verstellbar ist.

4. Transportwagen nach einem der Ansprüche 1 bis 3,
**dadurch gekennzeichnet, dass**
der wenigstens eine Regalboden (11) separat in der Höhe gegenüber der Aufstandsfläche (A) und separat zwischen einer Stellung im Laderaum (9) und einer Stellung wenigstens teilweise außerhalb des Laderaums (9) verstellbar vorgesehen ist und/oder dass der wenigstens eine Regalboden (11) zwischen einer Stellung im Laderaum (9) und einer Stellung wenigstens teilweise außerhalb des Laderaums (9) schwenkbar und/oder linear verschiebbar ausgebildet ist.

5. Transportwagen nach einem der Ansprüche 1 bis 4,
**dadurch gekennzeichnet, dass**
der Antrieb (13) zur wenigstens teilweisen Höhenverstellung des wenigstens einen Regalbodens (11) ein pneumatischer Antrieb ist, ein hydraulischer Antrieb ist, ein elektromagnetischer Linearantrieb (13) ist und/oder einen Elektromotor umfasst und/oder dass ein Antrieb(14) zum wenigstens teilweisen Verstellen des wenigstens einen Regalbodens (11) aus dem Laderaum (9) heraus und/oder in den Laderaum (9) hinein in pneumatischer Antrieb (14) ist, ein hydraulischer Antrieb ist, ein elektromagnetischer Linearantrieb ist und/oder einen Elektromotor umfasst.

6. Transportwagen nach einem der Ansprüche 1 bis 5,
**dadurch gekennzeichnet, dass**
eine Verstelleinrichtung (17) zum Verstellen des Regalbodens (11) in eine vorgegebene Gebrauchsstellung vorgesehen ist und dass, vorzugsweise, die Verstelleinrichtung (17) zur Bestimmung der vorgegebenen Gebrauchsstellung anhand von personenbezogenen Daten vorgesehen ist.

7. Transportwagen nach Anspruch 6,
**dadurch gekennzeichnet, dass**
eine Eingabeeinrichtung (19), insbesondere eine Tastatur, Touchpad und/oder ein Touchscreen, zur manuellen Eingabe der personenbezogenen Daten vorgesehen ist und/oder dass wenigstens eine Sensoreinrichtung (21), insbesondere umfassend einen optischen Sensor, vorzugsweise Kamera oder Laser, und/oder umfassend einen Empfänger zum Empfangen von Funksignalen, insbesondere Bluetooth, Mobilfunk, WLAN, RFID und/oder NFC Signalen zum Ermitteln personenbezogener Daten vorgesehen ist.

8. Transportwagen nach Anspruch 6 oder 7,
**dadurch gekennzeichnet, dass**
die Sensoreinrichtung (21) die Körpergröße (H) eines Sendungszustellers (SZ) ermittelt und/oder charakteristische Parameter, insbesondere eines Gesichts, einer Iris und/oder einer Fingerkuppe, zur Identifizierung eines Sendungszustellers (SZ) ermittelt.

9. Transportwagen nach einem der Ansprüche 1 bis 8,
**dadurch gekennzeichnet, dass**
der wenigstens eine Regalboden (11) von einer Teleskopstange (33) höhenverstellbar gehalten ist und, vorzugsweise, wenigstens zwei Regalböden (11) von unterschiedlichen, gegeneinander teleskopierbaren Segmenten (31,32) der Teleskopstange (33) gehalten sind und/oder dass ein Transportantrieb (3) zum eigenständigen Verfahren des Transportwagens (1,34) und, vorzugweise, eine Sensor- und Steuereinrichtung (6) zum autonomen Fahren des Transportwagens (1,34) vorgesehen ist.

10. Transportwagen nach einem der Ansprüche 6 bis 9,
**dadurch gekennzeichnet, dass**
wenigstens eine Tür (10) zum Verschließen des Laderaums (9) vorgesehen ist und, vorzugsweise, die wenigstens eine Tür (10) derart mit der Verstelleinrichtung (17) gekoppelt ist, so dass durch das Öffnen der wenigstens einen Tür (10) der wenigstens eine Regalboden (11) automatisch in eine vorgegebene Gebrauchsstellung verstellt wird und/oder dass wenigstes eine Aktivierungseinrichtung (15), insbesondere ein Taster, vorgesehen und die Aktivierungseinrichtung (15) derart mit der Verstelleinrichtung (17) gekoppelt ist, so dass durch die Aktivierung der Aktivierungseinrichtung (15) wenigstens ein Regalboden (11) automatisch in eine vorgegebene Gebrauchsstellung verstellt wird.

11. Verfahren zum Betrieb eines Transportwagens für Sendungen nach einem der Ansprüche 1 bis 10,
bei dem der wenigstens eine Regalboden (11) von wenigstens einer unteren, im Laderaum (9) angeordneten Nichtgebrauchsstellung in eine obere und wenigstens teilweise außerhalb des Laderaums (9) angeordnete Gebrauchsstellung in einem Abstand zwischen 1,0 m und 1,7 m, insbesondere 1,5 m, von der Aufstandsebene (A) verstellt wird.

12. Verfahren nach Anspruch 11,
bei dem der wenigstens eine Regalboden (11) von der Gebrauchsstellung wieder zurück in die Nichtgebrauchsstellung verstellt wird.

13. Verfahren nach Anspruch 11 oder 12,
bei dem das Verstellen des wenigstens einen Regalbodens (11) von der Nichtgebrauchsstellung in die Gebrauchsstellung und/oder zurück über wenigstens einen Antrieb (13,14) bewirkt wird und
bei dem, vorzugsweise, eine Verstelleinrichtung (17) eine von mehreren Gebrauchsstellungen festlegt und den wenigstens einen Antrieb (13,14) zur Verstellung des wenigstens einen Regalbodens (11) in die festgelegte Gebrauchsstellung ansteuert.

14. Verfahren nach einem der Ansprüche 11 bis 13,
bei dem von einem Sendungszusteller (SZ) wenigstens eine personenbezogene Information über eine Eingabeeinrichtung (19), insbesondere eine Tastatur, ein Touchpad und/oder einen Touchscreen, eingegeben wird und
bei dem eine Verstelleinrichtung (17) anhand der personenbezogenen Information nach vorgegebenen Kriterien eine von mehreren Gebrauchsstellungen zum Verstellen des wenigstens einen Regalbodens (11) auswählt.

15. Verfahren nach einem der Ansprüche 11 bis 14,
bei dem wenigstens eine Sensoreinrichtung (21), insbesondere mittels eines optischen Sensors, vorzugsweise in Form einer Kamera und/oder eines Lasers, und/oder mittels eines Empfängers zum Empfangen von Funksignalen, insbesondere über Bluetooth, Mobilfunk, WLAN, RFID und/oder NFC personenbezogene Informationen ermittelt und
bei dem eine Verstelleinrichtung (17) anhand der personenbezogenen Information nach vorgegebenen Kriterien eine von mehreren Gebrauchsstellungen zum Verstellen des wenigstens einen Regalbodens (11) auswählt und bei dem, vorzugsweise, die Sensoreinrichtung (21) die Körpergröße (H) eines Sendungszustellers (SZ) ermittelt und/oder charakteristische Parameter, insbesondere eines Gesichts, einer Iris und oder einer Fingerkuppe, zur Identifizierung eines Sendungszustellers (SZ) ermittelt.

16. Verfahren nach einem der Ansprüche 11 bis 15,
bei dem der wenigstens eine Regalboden (11) von einem Segment (31,32) einer Teleskopstange (33) getragen und über die Teleskopstange (33) auf die Höhe der Gebrauchsstellung verstellt wird und/oder
bei dem der wenigstens eine Regalboden (11) in Form eines Läufers (26) eines elektromagnetischen Linearantriebs (25), insbesondere in Form einer Stange (22), elektromagnetisch auf die Höhe der Gebrauchsstellung verstellt wird und/oder
bei dem der wenigstens eine Regalboden (11) pneumatisch, hydraulisch und/oder elektromotorisch auf die Höhe der Gebrauchsstellung verstellt wird und/oder bei dem der wenigstens eine Regalboden (11) pneumatisch, hydraulisch und/oder elektromotorisch wenigstens teilweise aus dem Laderaum (9) heraus in die Gebrauchsstellung bewegt, insbesondere geschwenkt, wird und/oder
bei dem der wenigstens eine Regalboden (11) pneumatisch, hydraulisch und/oder elektromotorisch wenigstens teilweise aus der Gebrauchsstellung in den Laderaum (9) bewegt, insbesondere geschwenkt, wird.

17. Verfahren nach einem der Ansprüche 11 bis 16,
bei dem der Transportwagen (1,34) über einen Transportantrieb (3) selbständig und über eine Sensor- und Steuereinrichtung (6) autonom verfahren wird und bei dem, vorzugsweise, der Transportwagen (1,34) autonom einen Sendungszusteller (SZ) zum Zustellort begleitet und/oder autonom einem Sendungszusteller (SZ) zum Zustellort folgt.

18. Verfahren nach einem der Ansprüche 11 bis 17,
bei dem die Verstelleinrichtung (17) über einen Türsensor (16) eine Information über das Öffnen wenigstens einer Tür (10) erhält und infolgedessen den wenigstens einen Antrieb (13,14) zum Verstellen des wenigstens einen Regalbodens (11) in eine vorbestimmte Gebrauchsstellung aktiviert und/oder bei dem die Verstelleinrichtung (17) über eine von einem Sendungszusteller (SZ) zu betätigende Aktivierungseinrichtung (15), insbesondere einen Taster, eine Information darüber erhält, dass der wenigstens eine Regalboden (11) in eine Gebrauchsstellung zu verstellen ist, und dies über den wenigstens einen Antrieb (13,14) veranlasst.

## Claims

1. Transport carriage (1, 34) for mail items (7), having a plurality of wheels (2) which define a contact plane (A) for displacing the transport carriage (1, 34), having a storage space (9) for receiving the mail items (7) during transport and having at least one shelf (11) for carrying the mail items (7),
**characterised in that**
the at least one shelf (11) can be moved from at least one lower non-use position arranged in the storage space (9) into an upper moderate position for use arranged at least partially outside the storage space (9), and back again, **in that** the at least one shelf (11) can be moved from at least one lower non-use position arranged in the storage space (9) into an upper raised position for use which is arranged at least partially outside the storage space (9), and back again, **in that** the moderate position for use and the raised position for use are arranged in a range between 1.0 m and 1.7 m, in particular 1.5 m, above the contact plane (A), **in that** the raised position for use is arranged above the moderate position for use and **in that** a drive (13, 14) is provided for at least partially adjusting the height of the shelf (11) above the contact plane (A).

2. Transport carriage according to claim 1,
**characterised in that**
the at least one shelf (11) can be moved from at least one lower non-use position arranged in the storage space (9) into at least three, preferably at least four, particularly at least five upper positions for use which are arranged one above the other and at least partially outside the storage space (9), and back again, and/or **in that** at least two, preferably at least three, in particular at least four, positions for use are arranged in a range between 1.1 m and 1.6 m, preferably in a range between 1.2 m and 1.5 m, in particular between 1.3 m and 1.4 m, above the contact plane (A) and/or **in that** the height difference of at least one pair of positions for use with respect to the contact plane (A) is less than 15 cm, preferably less than 12 cm, in particular less than 7 cm.

3. Transport carriage according to claim 1 or 2,
**characterised in that**
at least two shelves (11) are each arranged in a non-use position one above the other and, preferably, at least one shelf (11), in particular the lower shelf (11) in the non-use positions, can be moved from the non-use position arranged in the storage space (9) into an upper position for use arranged at least partially outside the storage space (9), and back again, and/or **in that** at least two pairs of shelves (11) are provided and the shelves (11) of each pair of shelves (11) are arranged in each case in a non-use position one above the other and, preferably, at least one shelf (11), in particular the lower shelf (11) in the non-use positions, can be moved from the non-use position arranged in the storage space (9) into an upper position for use arranged at least partially outside the storage space (9), and back again.

4. Transport carriage according to any one of claims 1 to 3,
**characterised in that**
the at least one shelf (11) is provided to be able to be adjusted separately in terms of height with respect to the contact face (A) and separately between a position in the storage space (9) and a position at least partially outside the storage space (9), and/or **in that** the at least one shelf (11) is constructed to be able to be pivoted and/or linearly displaced between a position in the storage space (9) and a position at least partially outside the storage space (9).

5. Transport carriage according to any one of claims 1 to 4,
**characterised in that**
the drive (13) for at least partially adjusting the height of the at least one shelf (11) is a pneumatic drive, a hydraulic drive, an electromagnetic linear drive (13) and/or comprises an electric motor and/or **in that** a drive (14) for at least partially moving the at least one shelf (11) out of the storage space (9) and/or into the storage space (9) is a pneumatic drive (14), is a hydraulic drive, is an electromagnetic linear drive and/or comprises an electric motor.

6. Transport carriage according to any one of claims 1 to 5,
**characterised in that**
a movement device (17) is provided for moving the shelf (11) into a predetermined position for use and **in that**, preferably, the movement device (17) is provided to determine the predetermined position for use based on personal data.

7. Transport carriage according to claim 6,
**characterised in that**
an input device (19), in particular a keyboard, touchpad and/or a touch screen, is provided for manual input of the personal data and/or **in that** at least one sensor device (21), in particular comprising an optical sensor, preferably a camera or laser, and/or comprising a receiver to receive radio signals, in particular Bluetooth, mobile communication, WLAN, RFID and/or NFC signals for establishing personal data is provided.

8. Transport carriage according to claim 6 or 7,
**characterised in that**
the sensor device (21) establishes the body size (H) of a mail delivery agent (SZ) and/or characteristic parameters, in particular of a face, an iris and/or a fingertip, in order to identify a mail delivery agent (SZ).

9. Transport carriage according to any one of claims 1 to 8,
**characterised in that**
the at least one shelf (11) is retained so as to be able to be adjusted in terms of height by a telescope-like rod (33) and, preferably, at least two shelves (11) are retained by means of different segments (31, 32) of the telescope-like rod (33) which can be adjusted in a telescope-like manner with respect to each other and/or **in that** a transport drive (3) is provided for independently displacing the transport carriage (1, 34) and, preferably, a sensor and control device (6) is provided for autonomously driving the transport carriage (1, 34).

10. Transport carriage according to any one of claims 6 to 9,
**characterised in that**
at least one door (10) is provided for closing the storage space (9) and, preferably, the at least one door (10) is coupled to the movement device (17) in such a manner that, by opening the at least one door (10), the at least one shelf (11) is automatically moved into a predetermined position for use and/or **in that** at least one activation device (15), in particular a button, is provided and the activation device (15) is coupled to the movement device (17) in such a manner that by activating the activation device (15) at least one shelf (11) is automatically moved into a predetermined position for use.

11. Method for operating a transport carriage for mail items according to any one of claims 1 to 10,
wherein the at least one shelf (11) is moved from at least one lower non-use position arranged in the storage space (9) into an upper position for use arranged at least partially outside the storage space (9) with spacing between 1.0 m and 1.7 m, in particular 1.5 m, from the contact plane (A).

12. Method according to claim 11,
wherein the at least one shelf (11) is moved from the position for use back into the non-use position again.

13. Method according to claim 11 or 12,
wherein the movement of the at least one shelf (11) from the non-use position into the position for use and/or back again is brought about by means of at least one drive (13, 14), and
wherein, preferably, a movement device (17) determines one of a plurality of positions for use and controls the at least one drive (13, 14) in order to move the at least one shelf (11) into the determined position for use.

14. Method according to any one of claims 11 to 13,
wherein, from a mail delivery agent (SZ), at least one item of personal information is input via an input device (19), in particular a keyboard, a touchpad and/or a touch screen, and wherein a movement device (17) based on the personal information in accordance with predetermined criteria selects one of a plurality of positions for use for moving the at least one shelf (11).

15. Method according to any one of claims 11 to 14,
wherein at least one sensor device (21), in particular by means of an optical sensor, preferably in the form of a camera and/or a laser, and/or by means of a receiver for receiving radio signals, in particular via Bluetooth, mobile communication, WLAN, RFID and/or NFC, establishes personal information, and
wherein a movement device (17), using the personal information in accordance with predetermined criteria selects one of a plurality of positions for use in order to move the at least one shelf (11) and wherein, preferably, the sensor device (21) establishes the body size (H) of a mail delivery agent (SZ) and/or characteristic parameters, in particular of a face, an iris and/or a fingertip, in order to identify a mail delivery agent (SZ).

16. Method according to any one of claims 11 to 15,
wherein the at least one shelf (11) is supported by a segment (31, 32) of a telescope-like rod (33) and is moved via the telescope-like rod (33) to the height of the position for use, and/or
wherein the at least one shelf (11) in the form of a rotor (26) of an electromagnetic linear drive, in particular in the form of a rod (22), is moved to the height of the position for use electromagnetically, and/or
wherein the at least one shelf (11) is moved pneumatically, hydraulically and/or in an electromotive manner to the height of the position for use, and/or
wherein the at least one shelf (11) is moved, in particular pivoted, pneumatically, hydraulically and/or in an electromotive manner at least partially out of the storage space (9) into the position for use, and/or
wherein the at least one shelf (11) is moved, in particular pivoted, pneumatically, hydraulically and/or in an electromotive manner at least partially out of the position for use into the storage space (9).

17. Method according to any one of claims 11 to 16,
wherein the transport carriage (1, 34) is displaced by means of a transport drive (3) independently and by means of a sensor and control device (6) autonomously and wherein, preferably, the transport carriage (1, 34) autonomously accompanies a mail delivery agent (SZ) to the delivery location and/or autonomously follows a mail delivery agent (SZ) to the delivery location.

18. Method according to any one of claims 11 to 17,
wherein the movement device (17) receives information relating to the opening of at least one door (10) via a door sensor (16) and consequently activates the at least one drive (13, 14) in order to move the at least one shelf (11) into a predetermined position for use and/or wherein the movement device (17) via an activation device (15), in particular a button, which is intended to be activated by a mail delivery agent (SZ), receives information to the effect that the at least one shelf (11) is intended to be moved into a position for use and initiates this via the at least one drive (13, 14).

## Revendications

1. Chariot de transport (1, 34) pour des envois (7), avec une pluralité de roues (2) définissant un plan d'assise (A) pour le déplacement du chariot de transport (1, 34), avec un espace de chargement (9) pour la réception d'envois (7) pendant le transport et avec au moins une étagère (11) pour le transport des envois (7),
**caractérisé en ce que**
au moins une étagère (11) est réglable à partir d'au moins une position inférieure de non-utilisation, agencée dans l'espace de chargement (9), dans une position supérieure d'utilisation modérée, agencée au moins partiellement à l'extérieur de l'espace de chargement (9), et inversement, **en ce qu'**au moins une étagère (11) est réglable à partir d'au moins une position inférieure de non-utilisation, agencée dans l'espace de chargement (9), dans une position supérieure d'utilisation surélevée, agencée au moins partiellement à l'extérieur de l'espace de chargement (9), et inversement, **en ce que** la position d'utilisation modérée et la position d'utilisation surélevée sont agencées dans une zone comprise entre 1,0 m et 1,7 m, notamment 1,5 m, au-dessus du plan d'assise (A), **en ce que** la position d'utilisation surélevée est agencée au-dessus de la position d'utilisation modérée, et **en ce qu'**un entraînement (13, 14) est prévu pour régler au moins partiellement la hauteur de l'étagère (11) au-dessus du plan d'assise (A).

2. Chariot de transport selon la revendication 1,
**caractérisé en ce que**
au moins une étagère (11) est réglable à partir d'au moins une position inférieure de non-utilisation, agencée dans l'espace de chargement (9), dans au moins trois, de préférence au moins quatre, notamment au moins cinq, positions supérieures d'utilisation, agencées les unes au-dessus des autres et au moins partiellement à l'extérieur de l'espace de chargement (9), et inversement et/ou qu'au moins deux, de préférence au moins trois, notamment au moins quatre positions d'utilisation sont agencées dans une zone comprise entre 1,1 m et 1,6 m, de préférence dans une zone comprise entre 1,2 m et 1,5 m, notamment entre 1,3 m et 1,4 m, au-dessus du plan d'assise (A) et/ou **en ce que** la différence de hauteur d'au moins une paire de positions d'utilisation par rapport au plan d'assise (A) est inférieure à 15 cm, de préférence inférieure à 12 cm, notamment inférieure à 7 cm.

3. Chariot de transport selon la revendication 1 ou 2,
**caractérisé en ce que**
au moins deux étagères (11) sont agencées l'une au-dessus de l'autre dans une position de non-utilisation et, de préférence, au moins une étagère (11), notamment l'étagère inférieure (11) dans les positions de non-utilisation, peut être déplacée de la position de non-utilisation, agencée dans l'espace de chargement (9), dans une position supérieure d'utilisation, agencée au moins partiellement à l'extérieur de l'espace de chargement (9), et inversement, et/ou **en ce que** l'on prévoit au moins deux paires d'étagères (11) et que les étagères (11) de chaque paire d'étagères (11) sont agencées l'une au-dessus de l'autre dans une position de non-utilisation et, de préférence, au moins une étagère (11), notamment l'étagère inférieure (11) dans les positions de non-utilisation, est réglable de la position de non-utilisation, agencée dans l'espace de chargement (9), dans une position supérieure d'utilisation, et au moins partiellement à l'extérieur de l'espace de chargement (9), et inversement.

4. Chariot de transport selon l'une des revendications 1 à 3, **caractérisé en ce que**
au moins une étagère (11) est réglable séparément à une certaine hauteur par rapport à la surface d'assise (A) et est réglable séparément entre une position dans l'espace de chargement (9) et une position au moins partiellement à l'extérieur de l'espace de chargement (9), et/ou **en ce qu'**au moins une étagère (11) est conçue de sorte à pouvoir pivoter, et/ou être déplacée linéairement, entre une position dans l'espace de chargement (9) et une position au moins partiellement à l'extérieur de l'espace de chargement (9).

5. Chariot de transport selon l'une des revendications 1 à 4, **caractérisé en ce que**
l'entraînement (13) pour le réglage en hauteur, au moins partiel, d'au moins une étagère (11) est un entraînement pneumatique, un entraînement hydraulique, un entraînement linéaire électromagnétique (13) et/ou comporte un moteur électrique et/ou **en ce qu'**un entraînement (14) pour le réglage, au moins partiel, d'au moins une étagère (11) hors de l'espace de chargement (9) et/ou dans l'espace de chargement (9) est un entraînement pneumatique (14), un entraînement hydraulique, un entraînement linéaire électromagnétique et/ou comporte un moteur électrique.

6. Chariot de transport selon l'une des revendications 1 à 5, **caractérisé en ce que**
l'on prévoit un dispositif de réglage (17) pour le réglage de l'étagère (11) dans une position d'utilisation prédéterminée et **en ce que** l'on prévoit, de préférence, le dispositif de réglage (17) pour déterminer la position d'utilisation prédéterminée en fonction de données à caractère personnel.

7. Chariot de transport selon la revendication 6,
**caractérisé en ce que**
l'on prévoit un dispositif de saisie (19), notamment un clavier, un pavé tactile et/ou un écran tactile pour la saisie manuelle de données à caractère personnel et/ou **en ce que** l'on prévoit au moins un dispositif de détection (21), comprenant notamment un capteur optique, de préférence une caméra ou un laser, et/ou comprenant un récepteur pour la réception de signaux radio, notamment de signaux Bluetooth, radio mobile, WLAN, RFID et/ou NFC pour la détermination de données à caractère personnel.

8. Chariot de transport selon la revendication 6 ou 7,
**caractérisé en ce que** le dispositif de détection (21) détermine la taille du corps (H) d'un livreur de courriers (SZ) et/ou détermine des paramètres caractéristiques, notamment un visage, un iris et/ou un bout de doigt, pour l'identification d'un livreur de courriers (SZ).

9. Chariot de transport selon l'une des revendications 1 à 8, **caractérisé en ce que**
au moins une étagère (11) est maintenue de manière réglable en hauteur par une tige télescopique (33) et, de préférence, au moins deux étagères (11) sont maintenues par différents segments (31, 32) de la tige télescopique (33), susceptibles d'être déployés de manière télescopique les uns par rapport aux autres, et/ou **en ce que** l'on prévoit un entraînement de transport (3) pour le déplacement autonome du chariot de transport (1, 34) et, de préférence, un dispositif de détection et de commande (6) pour la conduite autonome du chariot de transport (1, 34).

10. Chariot de transport selon l'une des revendications 6 à 9, **caractérisé en ce que**
l'on prévoit au moins une porte (10) pour fermer l'espace de chargement (9) et, de préférence, au moins une porte (10) est couplée au dispositif de réglage (17) de telle sorte qu'en ouvrant au moins une porte (10), au moins une étagère (11) est automatiquement réglée dans une position d'utilisation prédéterminée et/ou **en ce que** l'on prévoit au moins un dispositif d'activation (15), notamment un bouton-poussoir et le dispositif d'activation (15) est couplé au dispositif de réglage (17) de telle sorte que, en activant le dispositif d'activation (15), au moins une étagère (11) est automatiquement réglée dans une position d'utilisation prédéterminée.

11. Procédé permettant de faire fonctionner un chariot de transport pour les envois selon l'une des revendications 1 à 10,
dans lequel au moins une étagère (11) est réglée à partir d'au moins une position inférieure de non-utilisation, agencée dans l'espace de chargement (9), vers une position supérieure d'utilisation et au moins partiellement à l'extérieur de l'espace de chargement (9) à une distance comprise entre 1,0 m et 1,7 m, notamment 1,5 m, du plan d'assise (A).

12. Procédé selon la revendication 11,
dans lequel au moins une étagère (11) est redéplacée de la position d'utilisation à la position de non-utilisation.

13. Procédé selon la revendication 11 ou 12,
dans lequel l'on effectue le déplacement d'au moins une étagère (11) de la position de non-utilisation vers la position d'utilisation et/ou inversement par l'intermédiaire d'au moins un entraînement (13, 14) et
dans lequel, de préférence, un dispositif de réglage (17) détermine une position d'utilisation parmi différentes positions d'utilisation et commande au moins un entraînement (13, 14) pour le réglage d'au moins une étagère (11) dans la position d'utilisation déterminée.

14. Procédé selon l'une des revendications 11 à 13,
dans lequel au moins une information à caractère personnel est saisie par un livreur de courriers (SZ) par l'intermédiaire d'un dispositif de saisie (19), notamment un clavier, un pavé tactile et/ou un écran tactile, et
dans lequel un dispositif de réglage (17) sélectionne une position parmi plusieurs positions d'utilisation pour le réglage d'au moins une étagère (11) en fonction de l'information à caractère personnel selon des critères prédéterminés.

15. Procédé selon l'une des revendications 11 à 14,
dans lequel au moins un dispositif de détection (21), notamment par l'intermédiaire d'un capteur optique, de préférence sous la forme d'une caméra et/ou d'un laser, et/ou au moyen d'un récepteur pour la réception de signaux radio, notamment par Bluetooth, radio mobile, WLAN, RFID et/ou NFC, détermine des informations à caractère personnel et
dans lequel un dispositif de réglage (17) sélectionne une position parmi plusieurs positions d'utilisation pour le réglage d'au moins une étagère (11) en fonction de l'information à caractère personnel selon des critères prédéterminés et dans lequel, de préférence, le dispositif de détection (21) détermine la taille corporelle (H) d'un livreur de courriers (SZ) et/ou détermine des paramètres caractéristiques, notamment un visage, un iris et/ou un bout de doigt, pour l'identification d'un livreur de courriers (SZ).

16. Procédé selon l'une des revendications 11 à 15,
dans lequel au moins une étagère (11), portée par un segment (31, 32) d'une tige télescopique (33), est réglée à la hauteur de la position d'utilisation par l'intermédiaire de la tige télescopique (33) et/ou
dans lequel au moins une étagère (11) en forme d'un rotor (26) d'un entraînement linéaire électromagnétique (25), notamment en forme de tige (22), est réglée de manière électromagnétique à la hauteur de la position d'utilisation et/ou
dans lequel au moins une étagère (11) est réglée par voie pneumatique, hydraulique et/ou électromotrice à la hauteur de la position d'utilisation et/ou dans lequel au moins une étagère (11) est déplacée, notamment pivotées, par voie pneumatique, hydraulique et/ou électromotrice au moins partiellement hors de l'espace de chargement (9) dans la position d'utilisation et/ou dans lequel au moins une étagère (11) est déplacée, notamment pivotée, par voie pneumatique, hydraulique et/ou électromotrice au moins partiellement hors de la position d'utilisation dans l'espace de chargement (9).

17. Procédé selon l'une des revendications 11 à 16,
dans lequel le chariot de transport (1, 34) est déplacé de manière indépendante par l'intermédiaire d'un entraînement de transport (3) et de manière autonome par l'intermédiaire d'un dispositif de détection et de commande (6) et dans lequel, de préférence, le chariot de transport (1, 34) accompagne de manière autonome un livreur de courriers (SZ) vers le lieu de livraison et/ou suit de manière autonome un livreur de courriers (SZ) vers le lieu de livraison.

18. Procédé selon l'une des revendications 11 à 17,
dans lequel le dispositif de réglage (17) reçoit une information sur l'ouverture d'au moins une porte (10) par l'intermédiaire d'un capteur de porte (16) et active ainsi au moins un entraînement (13, 14) pour le réglage d'au moins une étagère (11) dans une position d'utilisation prédéterminée et/ou dans lequel le dispositif de réglage (17) reçoit une information par l'intermédiaire d'un dispositif d'activation (15), notamment un bouton-poussoir, à actionner par un livreur de courriers (SZ), portant sur le réglage d'au moins une étagère (11) dans une position d'utilisation et induit celui-ci par l'intermédiaire d'au moins un entraînement (13, 14).
